Europäisches Patentamt

European Patent Office

Office européen des brevets

(19)

(11) Publication number: **0 284 751 B1**

## EUROPEAN PATENT SPECIFICATION

(12)

(45) Date of publication of patent specification: **05.08.92**　(51) Int. Cl.⁵: **G06F  12/08**

(21) Application number: **88102093.7**

(22) Date of filing: **12.02.88**

(54) **Cache memory.**

(30) Priority: **03.04.87 US 34136**

(43) Date of publication of application:
**05.10.88 Bulletin  88/40**

(45) Publication of the grant of the patent:
**05.08.92 Bulletin  92/32**

(84) Designated Contracting States:
**DE FR GB**

(56) References cited:
**EP-A- 0 032 956**
**EP-A- 0 039 412**
**EP-A- 0 082 949**

**IBM TECHNICAL DISCLOSURE BULLETIN vol. 29, no.1, June 1986, pages 357-359, Armonk,New York, USA:"Branch-Prossing Instruction Cache"**

**IBM TECHNICAL DISCLOSURE BULLETIN vol. 25, no. 5, October 1982, pages 2488 - 2489; J.H. CHRISTIAN et al.: "Shared Buffer Control"**

(73) Proprietor: **International Business Machines Corporation**
**Old Orchard Road**
**Armonk, N.Y. 10504(US)**

(72) Inventor: **Brenza, James Gerald**
**150 Peekakill Hollow Rd.**
**Putnam Valley, NY 10579(US)**

(74) Representative: **Rudolph, Wolfgang, Dipl.-Ing.**
**IBM Deutschland GmbH Schönaicher**
**Strasse 220**
**W-7030 Böblingen(DE)**

Rank Xerox (UK) Business Services

## Description

The present invention relates to a cache memory according to the preamble of claim 1.

One of the most important factors in the performance of a high speed, sophisticated computer is the performance of the associated memory system. It is now generally assumed that such a computer system will include the use of a cache memory to facilitate the handling of input and output information. It is known that the larger the capacity and the faster the speed of operation of a cache memory, the better the overall performance of the computer system.

The prior art shows various efforts to improve the performance of cache memories. These efforts have included the use of multiple cache memories in various organizational relationships. For example, the use of separate cache memories for instructions and for data is known. Other cache designs use two caches in parallel in an odd-even interleave design so that memory access time for information from the cache for a string of data is improved. Other cache designs use different size caches in a hierarchical arrangement. Some of these cache designs are intended for use with more than one processing element or execution unit so that several different cache accesses may be initiated in a short time interval.

One of the difficulties typical of these prior art designs is that when a cache request is made, the cache must perform a search to determine if the information is available. If the cache access is successful, the information is provided to the requesting unit. If the information is not available, a cache miss routine is followed which summons the requested information from another level of memory while the requesting unit either waits or does something else. In most cache designs there is a significant time penalty if a cache miss occurs and the design is optimized so that cache misses are infrequent.

In the prior art, a multiprocessor environment has typically provided a separate cache memory for each processor. However, it is expensive and inefficient to provide an independent cache for each processor when a common main memory is used. In addition, if more than one processor needs to use the same information, management of multiple copies of information in different caches is difficult and complex. However, the prior art suggests a preference for managing multiple shared and/or independent caches in a multiprocessor environment compared to the complexity or the inefficiency of managing a single cache in a multiprocessor environment. This is disclosed in the following prior art:

U.S.A. patent number 4,169,284 entitled "Cache Control For Concurrent Access", assigned to the same assignee as the present invention, shows a cache memory control which provides two cache access timing cycles during each processor storage request cycle. Although this cache allows more than one access per cycle it represents a time interleaved cache and not a true simultaneous access cache.

U.S.A. patent number 4,371,929 entitled "Multiprocessor System with High Density Memory Set Architecture Including Partitionable Cache Store Interface To Shared Disk Drive Memory", assigned to the same assignee as the present invention, shows a cache memory with storage partitions functioning on a time interleaved basis.

U.S.A. patent number 4,441,155 entitled "Page Controlled Cache Directory Addressing", assigned to the same assignee as the present invention, shows a cache addressing control system to reduce the cache miss rate.

U.S.A. patent number 4,442,487 entitled "Three Level Memory Hierarchy Using Write And Share Flags", assigned to the same assignee as the present invention, shows different levels of cache and cache separated into private and shared cache systems. The private and shared cache systems are primarily separate caches with switching mechanisms between them and are not separate portions of the same cache. This design is intended to allow multiprocessor systems to share a memory facility without having the cross-interrogation requirements that would otherwise be necessary.

U.S.A. patent number 4,463,424 entitled "Method For Dynamically Allocating LRU/MRU Managed Memory Among Concurrent Sequential Processes", assigned to the same assignee as the present invention, is a cache management system for separating a cache memory into partitions of allocated space based on the requirement of the process using the cache memory. The partitions are allocated by a supervisory process and are not physically determined.

U.S.A. patent number 4,464,712 entitled "Second Level Cache Replacement Method and Apparatus", assigned to the same assignee as the present invention, treats a cache memory system as consisting of separate subsets of pages which are associated with a replacement flag mechanism to control access for replacement of cache contents.

U.S.A. patent number 4,484,267 entitled "Cache Sharing Control In A Multiprocessor" assigned to the same assignee as the present invention, is a multiprocessing environment where each processor has a private cache. Each cache has a directory containing a sharing flag to control whether the associated cache line operates in a store-through or a store-in mode. This creates two different types of cache operating modes for use in handling both normal cache accesses and the cross-interrogation process with other caches.

There are other patents of interest in this field. U.S.A. patent number 4,503,501 shows cache memory space partitioned into domains by a supervisory control system. U.S.A. patent number 4,493,033 shows a dual ported cache operating in a time interleaved manner. U.S.A. patent number 4,195,342 shows another dual ported interleaved cache arrangement. U.S.A. patent number 3,618,041 is an early patent showing segregation of instructions and operands into different caches. U.S.A. patent number 4,502,110 is a split cache having equal size operand and instruction memories.

IBM Technical Disclosure Bulletin, Vol. 22, No. 2, July 1979, pages 851 and 852, entitled "Partitioned Memory And Split SCE For Asymmetric Multiprocessor" shows an electronic fence under supervisory control for separating a memory into two sections and restricting access to one of the two sections.

The IBM Technical Disclosure Bulletin Vol. 29, No. 1, June 1986, pages 357 - 359, entitled "Branch-Processing Instruction Cache" teaches a novel instruction fetching mechanism designed for computer architecture which processes branch instructions while fetching other instructions, thereby eliminating most of the so-called branch penalty. In most architectures and machine organizations, branch instructions are handled by the fixed-point unit, degrading potentially performance. Instruction cache bandwidth is typically limited. By integrating branch processing into the instruction fetching/cache accessing process, these limitations are overcome. Machine cycles per instruction are substantially reduced at a small cost. Due to the predecoding when new lines are written into the cache, this branch processing mechanism is nearly completely "hidden" in normal instruction fetching, so extra pipeline stages to perform a similar function are therefore not required. The instruction cache spans four physical arrays; each array can be independently addressed. In this example, a maximum of four instructions are fetched simultaneously from the instruction cache, one from each array, beginning with the current value of the instruction counter and continuing to the end of the cache line containing the requested word. To save chip area and power, sense amps are shared among four neighboring columns of the cache rows, except for those columns which store the directory and special function bits. Each line of the instruction cache spans two physical rows of the cache arrays; therefore, logic is required to transform some of the low-order bits of the address generated by the IC to access the proper row.

There is a continuing need for improvements in cache memory design, particularly for cache designs that may be used to handle a large number of requests in a short time interval or essentially simultaneously.

The solution is an improved cache memory system which is described in the characterizing part of claim 1.

Further solutions and improvements are described in claims 2 - 20.

This improved cache memory offers particular advantages in an environment having multiple processing elements or multiprocessors but does not require or depend upon such an environment to display its advantages.

Multiprocessing in the context of a single CPU involves multiple instruction processing units and multiple execution processing units. In order to reduce the time required to execute an object program, it is desirable to process multiple instructions from that program in parallel, which then invoke multiple execution units in parallel. This practice involves multiple instruction decoders, parallel instruction streams, and "out-of-sequence" executions. Since both the instructions and data operands are usually requested from cache, it is desirable to provide multiple cache ports and multiple, independent cache operations during a single CPU machine cycle.

The cache memory according to the invention is an M sectioned or partitioned cache where M is preferably a power of 2 such as 8. The cache is capable of performing one event per partition per cycle or M events per cycle. The cache has N ports where N is equal to or less than M. N is machine specific but is usually less than M and factorable by 2. The embodiment discussed in this application is a cache with eight partitions and six ports because these seem to be realizable and useful design factors considering the appropriate measures of design complexity and performance improvement. The number of partitions is not limited to 8 and may just as well be 4, 16 or 32. The cache is controlled using a partition look-aside table (PLAT) which identifies the correct partition to access for information when a request is sent to cache.

Each cache partition operates independently and in parallel. Each partition may execute a store or fetch operation on each machine cycle. Address switches, data bus switches and special control systems are provided so that any partition may be connected to any port. Thus, multiple combinations of partition to port connections can be controlled for each cycle so that the cache may execute a combination of N stores and fetches at each cycle. The cache is designed so that the number of partitions is equal to the number of set-associative bins in the design. The cache data placement is such that all data conventionally allocated to a particular bin is also allocated to a corresponding real partition. That is, a cache line is fully contained within a single partition. Thus, a processor with multiple execution units may perform several stores or fetches at the same time when those requests are directed to different cache partitions.

A PLAT (partition look-aside table) controls the cache and stores a set of the more recently accessed cache line requests together with a partition assignment identifier for the line address. Multiple PLAT's can be provided for instruction requests and for operand requests.

Using the stored information, the PLAT directs machine produced addresses to the correct cache partition when it is determined that the information resides in cache. A miss in the PLAT does not mean a cache miss as that term is generally understood. If the partition information is not in the PLAT, the cache request is directed to all partitions and the cache directory simultaneously using a global request. If the information is found in cache as a result of a global request, the PLAT is updated with the line address and partition identifier. If the information is not found in cache, a known cache miss routine is used, such as, use of a Directory Look-Aside Table (DLAT) and an access to main memory or a higher level of cache.

The cache miss-control-logic has, in part, an LRU (least recently used) algorithm which determines the location, or for this cache the partition number, in which to load the new line fetched from the higher level storage hierarchy. In this way, new cache lines are rotated to all partitions on a least-recently-used basis.

The embodiment of a partitioned cache shown here is referred to as an L1 cache which is a private processor cache. An L2 or L3 cache is larger and closer to main memory than an L1 cache and may be shared. This L1 cache does not first execute a cast-out of the old line prior to the new line load operation since a store-thru L1 cache is implemented. That is, all store requests are sent to L1 and to at least one higher level of the storage hierarchy. Loading new line data into the cache results in just one of M partitions being busy.

FIGURE 1 is a system diagram of a computer system having multiple central processing units incorporating a partitioned cache according to the present invention ensuring a common storage hierarchy.

FIGURE 2 is a schematic diagram of an embodiment of a partitioned cache memory according to the present invention.

FIGURE 3 is a more detailed showing of the cache arrays, directory, address, data, and control busses of the partitioned cache shown in FIGURE 2.

FIGURES 4A, 4B, 4C and 4D are in left to right order and show a detailed diagram of the control bus structure associated with the partitioned cache memory shown in FIGURE 2.

FIGURE 5A is a showing of the relationship of the directory and partition structure in a cache memory according to the present invention as shown in FIGURE 2.

FIGURE 5B shows the organization of one of the address ports comprising the address bus shown in FIGURE 5A.

FIGURE 6 is a detailed showing of one of the fetch ports of a cache memory according to the embodiment shown in FIGURE 2.

FIGURE 7 is a detailed showing of an embodiment of a CPU store port according to the cache memory of FIGURE 2.

FIGURE 8 is a detailed showing of the PLAT structure of the cache memory shown in FIGURE 2.

FIGURE 9 is a showing of a schematic diagram of the structure of a data field in the instruction type PLAT according to the present invention.

FIGURE 10 is a showing of another structure of a data field in the data type PLAT according to the present invention.

FIGURES 11A and 11B are in left to right order of a showing of a partitioned cache directory and partitioned cache data array according to the present invention and operation with a single cache partition.

FIGURES 12A, 12B and 12C are each a detailed showing of different embodiments of the address structure of a partitioned cache memory according to the present invention.

FIGURE 13 is a detailed showing of a fault tolerant structure for identifying and shutting off faulty partitions according to the present invention.

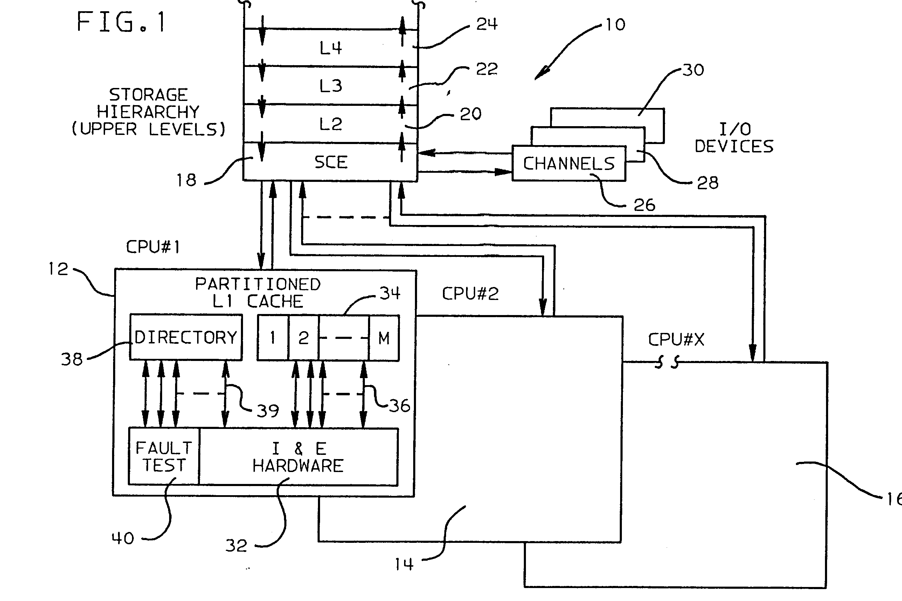

Referring now to FIGURE 1, a computer system 10 is shown which contains multiple central processing units 12, 14 and so forth to unit 16. Each of the central processing units has an input and output connection to a system control element 18. The system control element 18 is connected to a L2 (level 2) memory or storage hierarchy 20 which in turn is connected to successive levels of storage hierarchy L3 which is labeled 22 and L4 which is labeled 24. Each of these levels is progressively larger in capacity and further from the processor. The object is to have instructions and data as close to the central processing units as is possible for the size of memory involved. The use of multiple storage hierarchies in computer systems is known. The showing of these levels is illustrative of design practice and not a particular requirement of the partition cache. The system control element 18 also has various channels 26, 28 and 30 which serve to provide connections to the input-output devices which may be terminals, printers, disk-drives and the like.

Each central processing unit will contain instruction and execution hardware labeled generally 32, and hardware fault test logic labeled generally 40. The instruction and execution hardware 32 allows each central processing unit to perform conventional kinds of computer operations. Associated with the central processing unit is a L1 (level 1) cache memory system which will be a partitioned cache memory 34 according to the present invention. Such a cache 34 contains M partitions of memory and is connected by data paths 36 to the instruction and execution hardware unit 32. Up to N data paths 36 may be used depending on the optimum data flow requirements intended for the instruction and execution unit.

A directory 38 is provided to facilitate finding information in a storage hierarchy which is called for by the instruction and execution hardware 32. Directory 38 is connected by control paths and data paths 39 to the instruction and execution hardware 32.

The hardware fault test logic 40 monitors the address, data and control paths to and from the I to E hardware, directory and cache. Should a failure occur in any of these paths, a fault latch associated with a particular failure may be set for diagnostic, recovery, or otherwise corrective actions.

The other central processing units connected to the same system control element 18 will have similar internal structures providing for instruction and execution, a local partitioned cache memory, and an appropriate directory to access the contents of the storage hierarchy.

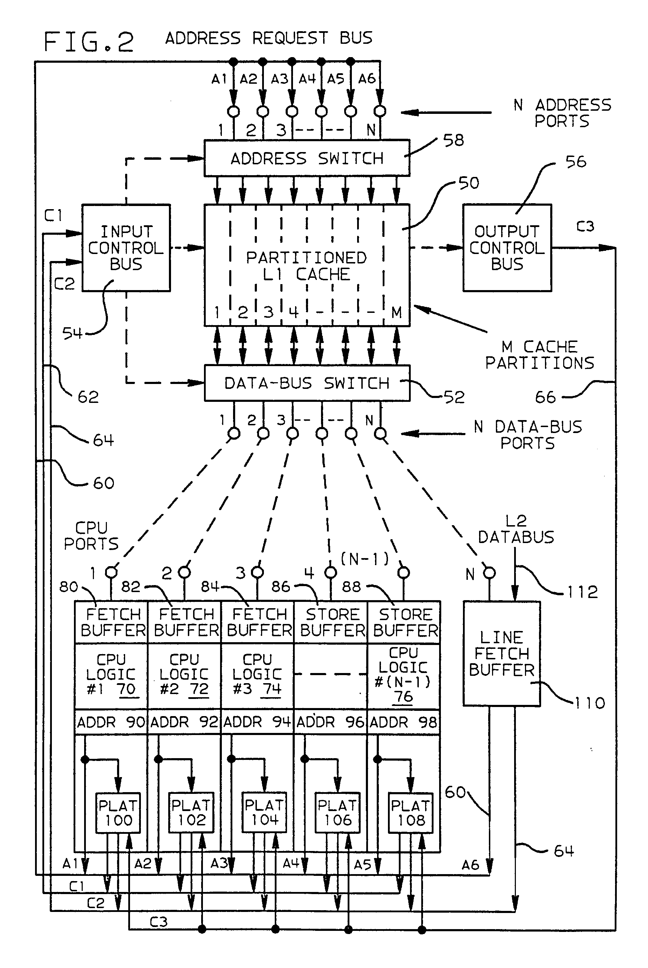

Referring now to FIGURE 2, the structure of a partitioned cache and PLAT according to the present invention is shown. A cache memory having M cache partitions 50 is shown. In this case, for convenience, eight cache partitions are shown in this particular embodiment. This appears to be an appropriate number for many purposes to provide a manageable level of control as well as providing the advantages that may be obtained in a partitioned cache memory.

The various cache partitions 50 are connected by a data bus switch mechanism 52 to N data bus ports. In this case, six data bus ports are used because it appears to be an appropriate number to work effectively with a cache memory having eight partitions and for the requirements of the hypothetical processor with which this system will be used.

The data bus switch 52 is under the control of an input control bus unit 54 which provides appropriate switching control signals for the data bus ports. The cache also has an output control bus unit 56 which controls the output data bus structure. The input control bus unit 54 is connected to an input address switch 58 which assigns requested addresses to the appropriate partitions under the control of an address request bus 60. The input control bus unit 54 is also connected to the data-bus switch 52 which assigns the data-bus ports to the addressed partition.

Input control bus unit 54 is connected with two control busses 62 and 64. Control bus 62 is the C1 bus which handles global requests of the cache unit. A global request of the cache unit is one which is directed to all partitions of the cache simultaneously. This will be explained in greater detail later. Control bus 64 is the C2 bus which handles local requests of the cache unit which are directed to a specific selected partition. These local requests of the cache unit will be explained in greater detail later.

Output control bus unit 56 is connected to the C3 bus 66 which handles local output control signals from the cache. The significance of the local output requests will be explained later but it may be observed that since any contents of the cache reside in a specific partition, only specific partitions will be producing output requests and therefore all output requests are local and cannot be global.

Each central processor unit (CPU) will have various arithmetic and logic units associated with it. In FIGURE 2, a central processor unit having various elements 70, 72, 74 and 76 is shown. These units may be of any type desired and they consist of various combinations of arithmetic, logic or instruction processing elements. Each of the data busses from the data bus switch 52 is connected to this group of central processor units through a combination of fetch buffers and store buffers to provide the plurality of input and output data paths to the central processing units. Thus, in a case where six data busses are proposed, three of the data busses may be connected with fetch buffers 80, 82 and 84 while two of the busses are connected to store buffers 86 and 88. All of these buffers are connected to the central processing unit and its various elements.

The central processor generates requests for the memory hierarchy to a plurality of address generating mechanisms 90, 92, 94, 96 and 98. The address generating units are connected to an associated PLAT so that the central processor has a plurality of PLAT units 100, 102, 104, 106 and 108. Addresses generated are placed on an address bus for each address generating mechanism on the address request bus 60 as well as to the associated PLAT. Each PLAT when it receives an input address may generate a global request of the partitioned cache on the C1 bus or a local request of the partitioned cache on using a selected one of the C2 busses.

The PLAT's each have an input bus from the output control bus unit 56 containing local input control signals. In general, when a central processor logic unit, such as logic unit 70 makes a request of memory, the address generating unit such as 90, produces an address request on the address request bus 60. This request goes both to address switch 58 and to the PLAT 100. If the PLAT can identify the partition of the cache in which the requested information is located, a request on the local request bus 64 is generated to the input control bus unit 54. This causes the address switch 58 to direct the requested address only to the particular partition in the cache containing the requested information. The data-bus switch out 52 is then switched to provide the requested information from the particular partition in which it is located to the particular requesting unit for which the information was obtained. In the case where the PLAT cannot identify a particular partition, the global request bus 62 is activated and the address switch provides the address to all partitions of the cache memory.

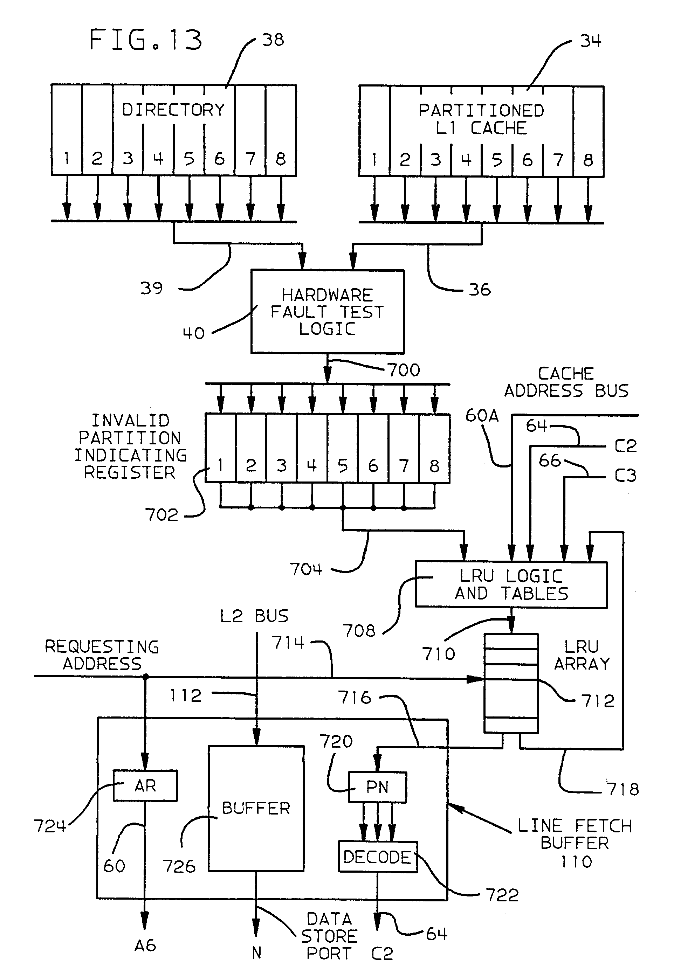

A line fetch buffer 110 is provided so that if requested information is not in the cache 50, a request may be passed to the next level of memory in the hierarchy for the requested information. The line fetch buffer therefore is connected to one of the data bus ports of the cache, and in this example, is shown as being connected to the Nth or last port. The line fetch buffer is also connected to the address request bus 60 and to the control bus 64 or control signals. The data bus from the next level of storage hierarchy is shown schematically at 112. It is important to note that the line fetch buffer 110 only requires access to a single selected cache partition when storing the contents of the line fetch buffer into cache. The other cache partitions may operate normally when the line fetch buffer is storing into cache. See FIGURE 13 also.

Generally, the operation of the system shown in FIGURE 2 may be described in the following fashion.

The cache is divided into a plurality of sections or partitions and each partition operates independently and in parallel with the others. Each partition may execute a store or a fetch operation on each machine cycle. Address switches 58, data bus switches 52, and the appropriate control systems are provided so that any partition may be connected to any input or output port. Thus, multiple combinations of partition and port connections may be activated during a single cycle of memory operation. This permits the cache to execute a combination of stores and fetches in a single machine cycle equal to or less than the number of ports.

The number of partitions is equal to the number of set-associative bins chosen for the cache design. The cache data placement is such that all data conventionally allocated to a particular bin is now allocated to occur corresponding to a physical partition.

The partition look-aside table (PLAT) is incorporated into the processor design. The exact logical and physical placement of the PLAT is as to the designer and may depend on machine organization. One appropriate location for one or more PLAT's is close to the address generating hardware in the processor. Multiple PLAT's can be used for handling a typical central processor organization. For example, one type of PLAT may be ideally designed for handling instruction requests and another type may be used for data operand requests. Multiple copies of either type may be used, individually, by the CPU logic units.

The PLAT's will store a set of most recently accessed L1 line addresses together with a partition identifier for each such line address. The PLAT's will then direct machine generated addresses to the correct L1 cache partition in a high percentage of the L1 cache access requests. Such requests are called local requests and use the local control line bus 64. A PLAT miss will require that the generated address be directed to all partitions simultaneously to determine the partition allocated to the corresponding L1 line. In this case, the global control line bus 62 will be used. At this time a new entry is made in the PLAT's storing the line address and partition identifier, subsequent store or fetch requests to the same L1 line will be directed to the correct partition until the entry is aged from the PLAT.

Ideally the best performance from a partitioned cache memory according to the present invention would result with the number of ports equal to the number of partitions, and if each port was connected with a partition on every excess cycle. However, physical constraints such as the number of input and output connections per memory array chip may limit the maximum number of ports.

There is a direct correspondence between address ports and data ports. That is, address port 1 is connected to address switch 58 which is provided for data port 1 which in turn is connected to data bus switch 52 and so forth. These port pairs are fixed in the hardware. Furthermore, each data port is either a fetch port or a store port when unidirectional bus drivers are used. With duplex drivers and data switches at the CPU ports, each port may serve as both a fetch and a store port. However, for purposes of this description, the ports are described as one directional ports either as fetch ports or store ports.

As stated before, the address switch may function in either the global request mode or the local request mode. A global request causes one of the addresses presented to the address switch to be presented to all the partitions of the cache simultaneously. Thus, the address is switched simultaneously to all directory elements and all cache memory partitions. This is based on control of the global control bus 62. The global control cycle executes as with a conventional cache in the sense that, if the data is valid in the cache, one of the eight directory elements will compare positive and raise a selected gate to the corresponding cache partition. This output is then switched to the requesting data port bus. One global request may be executed in a single machine cycle.

A local request causes an address to be switched to the selected one of the M cache partitions and the directory is not used for the handling of the local requests. During a single machine cycle as many local request addresses may be switched to the cache partitions as there are ports to the cache memory. This is dependent upon each of the local request addresses being to a different partition so that each of the partitions which are addressed may be uniquely connected to a single port. Multiple requests to the same partition on consecutive machine cycles are allowed. The input control busses 62 and 64 determine for each individual address port whether the requesting address is a global request or local request and which port is accessed. If the request is a local request, the control bus 64 codes the partition identifier for the target cache line.

The data bus switch 52 is used to switch the outputs from the partitioned cache arrays 50 to the data bus ports for fetch requests, and to switch inputs from the data bus ports to the partitioned cache arrays for store requests. Whenever the requesting address is a global request, indicating a PLAT miss, and the data is actually found in the cache, in addition to returning the requested data to the CPU, the partition identifier is also returned to the CPU on the control bus 66 so that the PLAT adds that information to its array. A new entry is created in the PLAT storing both the target cache line address and the partition identifier. Subsequent references to that cache line will result in PLAT hits and local requests.

In this example the cache has N direct access ports where N is fixed at the number 6 and the central processor unit is assigned N-1 direct access ports to the cache. Thus, the processor has one less port accessing the cache than the cache has ports. In this case, the processor is assigned five direct access ports to the cache. The last port is reserved for put-away operations of the line fetch buffer 110. For the case of a unidirectional buffer, each port is either a fetch port or a store port. In this example, ports 1, 2 and 3 are assigned to fetch buffers 80, 82 and 84 and ports 4, 5 and 6 are assigned as store ports to store buffer 86, store buffer 88 and the line fetch buffer 110. Each port is terminated at the CPU with fetch or store buffers. These buffers may vary in size depending on their optimum design and the bus transfer size, for example, 8 to 512 bytes.

The individual subdivisions of the CPU are symbolic and are intended to portray the CPU design in which many operations are executing in parallel and therefore require multiple accesses per cycle to the cache to reduce the average cycles per instruction. One or more of the subdivisions may be thought to be an instruction processor, a fixed point arithmetic unit, a floating point arithmetic unit, a vector processor, and so forth to illustrate various possible computer functions. The best allocation of cache ports to a CPU function, is based on CPU design optimization, including the optimum mix of store and fetch ports to total the number of provided ports to the cache.

Each central processor subdivision such as 70, 72, 74, and 76, in addition to its processor function have the hardware capability to generate an address when cache data is needed for instruction fetches, operand fetches, or operand stores. This is indicated by the provision of address generating units 90, 92, 94, 96, and 98. The address generation may result from incrementing a counter, reading an address from an array stack, taking the result from an address generating adder and so forth. After the address is provided, the address is placed on the address request bus 60 where it is provided to the local PLAT, such as PLAT 100, 102, 104, 106 or 108 as well as to the address switch 58 and to the line fetch buffer 110. The line address is tested in the local PLAT. If a PLAT miss occurs, the PLAT places a bit on the global control bus 62 to indicate a global request for that PLAT. If a PLAT hit occurs, a bit is placed on one of the positions of the local request control bus 64 to indicate the partition to which that address should be directed. The placing of this bit on the position of the local control bus indicates both the presence of the local request and identifies the partition for the requested data in the cache.

Although, the system in FIGURE 2 provides one PLAT for each CPU logic unit, a variety of PLAT arrangements are possible, depending on the design requirements. It may be desirable to have different types of PLAT's for different types of functions. Each type may then be replicated at each CPU logic unit which performs that function. For example, one type is ideally provided for data operand fetches and stores. Each type may then have multiple copies strategically located in the CPU logic partitions. Each PLAT is a small register array with, for example, (1-4) comparators, and duplication of hardware is not difficult due to the comparatively small amount of hardware required for each PLAT. Multiple comparators may be provided since a "set-associative" arrangement of the PLAT arrays improve their performance.

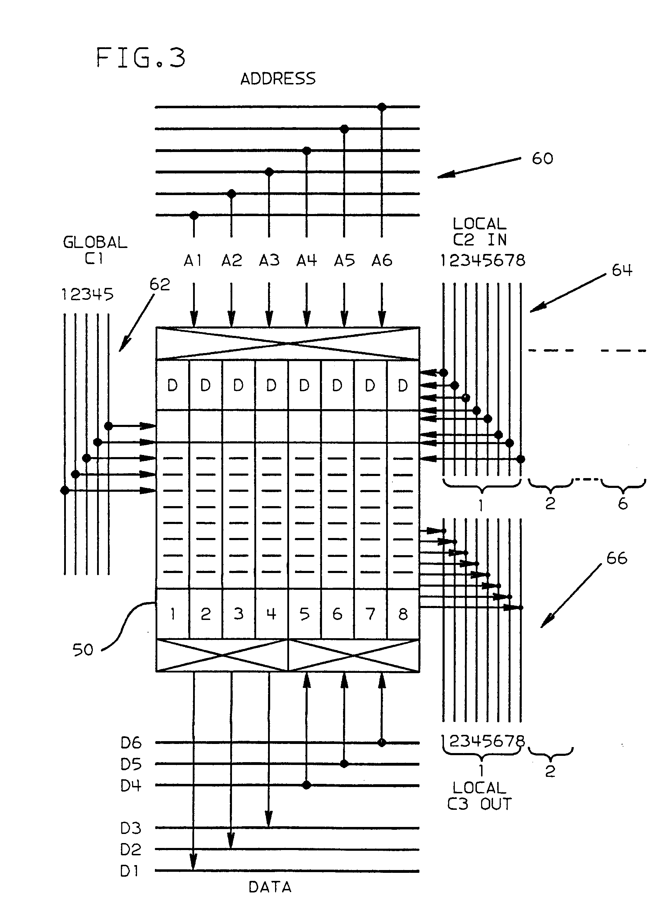

FIGURE 3 shows the embodiment of the partitioned cache 50 of FIGURE 2 in greater detail. The global bus 62 services ports 1 through 5 of the central processor. Each bit of the global control bus indicates the requesting unit of the central processing unit. Bus 62 does not have a global position although it could have, since the put away of the line fetch buffer is always a local request which knows the correct cache partition to access; based on LRU logic. Each PLAT type has a local control out bus C3 shown schematically at numeral 66. This description indicates one type for instruction addresses and a second type for data addresses. Each may have multiple connections to multiple PLAT copies. This control bus 66 returns the partition identifier, determined by a global directory search, to be stored in the particular PLAT's for a new entry. Port 6 is shown in FIGURE 2, and is used for line put away and does not use a local C3 output control bus because it receives its partition identifier for store requests from the least recently used (LRU) control system, shown in more detail in FIGURE 13. The output control bus C3 also includes a valid store line to be described later. Also indicated in the figure is the internal structure of the partitioned cache. Each partition includes an address switch, a partition directory, the actual cache memory array and data bus switches.

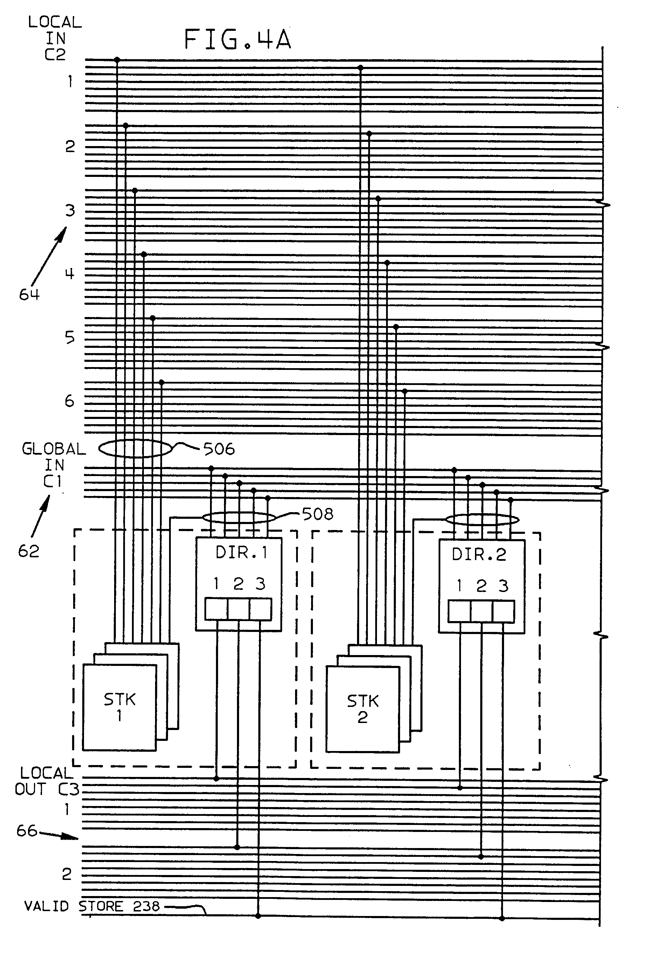

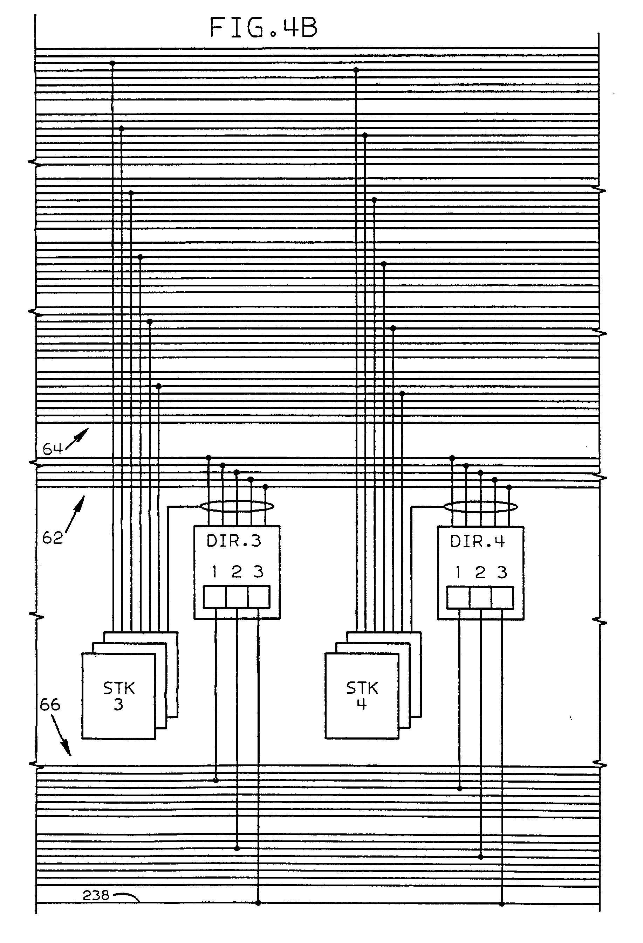

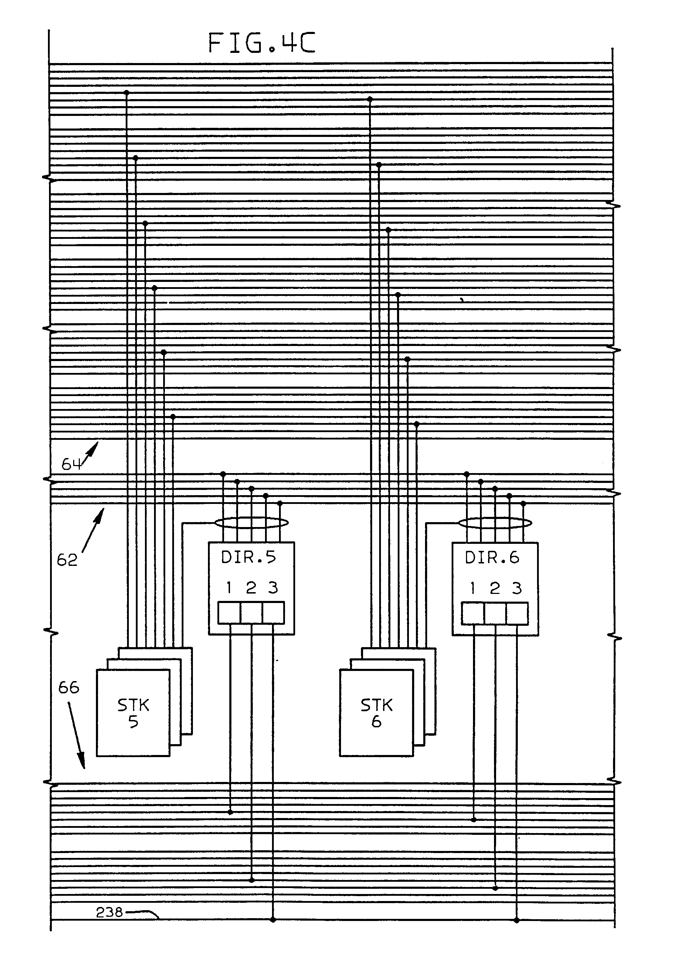

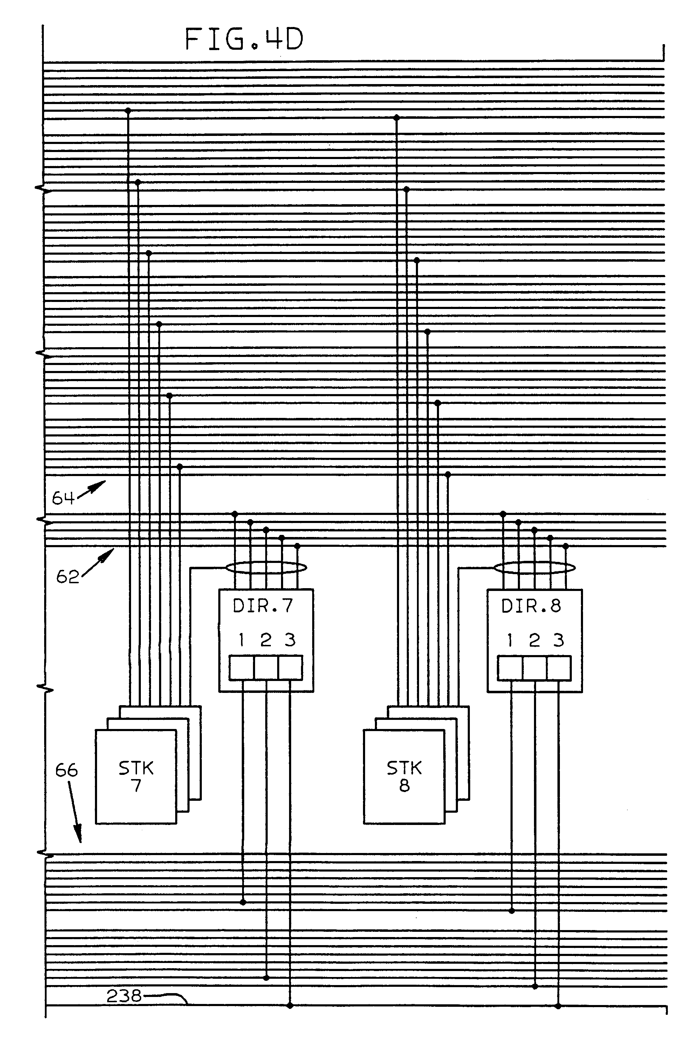

Referring now to FIGURES 4A, 4B, 4C and 4D, each of the eight cache partitions of the cache memory 50 as shown in FIGURE 2 is shown with its directory array, and memory stack elements and directory elements are shown connected to the control bus structure. The address and data busses are not shown in this figure but are shown in greater detail in other figures. All the lines of the global control bus in 62 are directed to all eight of the directory elements, DIR.1 through DIR.8. The local control bus C2 is broken into six component groups of control lines, each component having one line for each memory stack. Thus, the component lines of the local bus in 64 are each directed to a target partition memory stack of the memory array.

The lines of the local control bus out 66 are derived from a register in each of the directory elements. In this description, the register has three bits which have the following functions: Bit 1 is a partition identifier to indicate an instruction type PLAT; Bit 2 is a partition identifier to indicate a data type PLAT and Bit 3 is a valid store indicator line. The registers for the directory elements may have other compositions and functions as necessary in the memory structure. The local output busses for each bit in the register in the directories have a unique line so that the particular cache partition directory originating a signal can be identified. The local output busses thus receive the partition identifier bit resulting from a global request and the valid store (V/S) line if the store interrogate of the directory element is positive. Note that the store interrogation operation and valid store line generation is performed for both global fetch and global store requests. The store interrogate operation involves testing various control bits in the directory such as the valid bit, exclusive bit, storage key bits, etc.

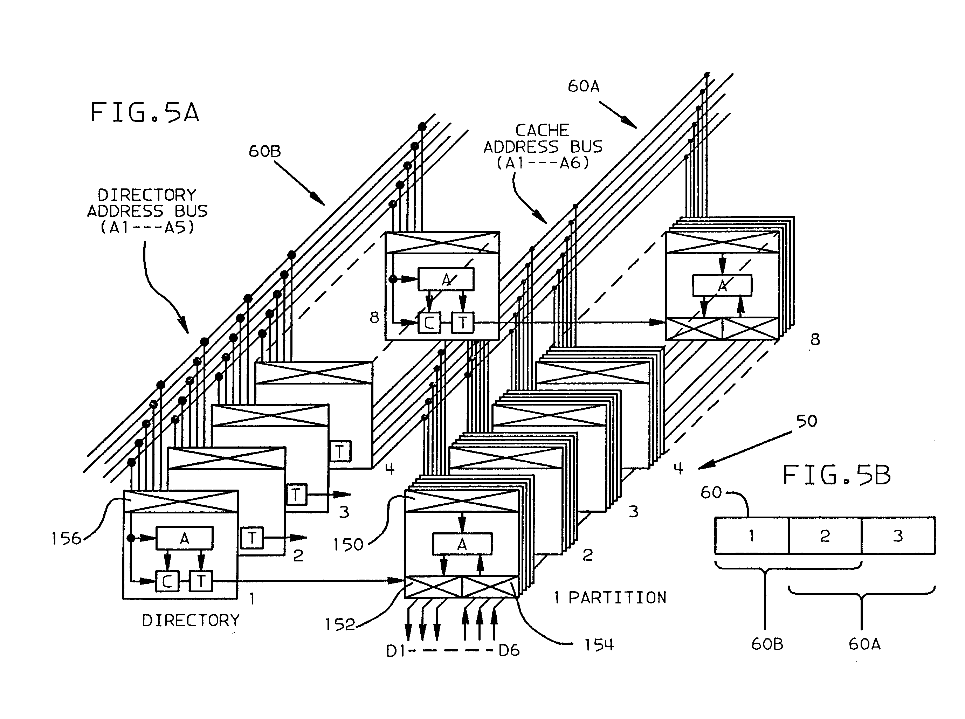

Referring now to FIGURE 5, the cache address bus 60A is connected to each of the eight partitions of the cache 50 according to the present invention.

Similarly, the output data busses D1, D2, and D3 as well as the input data busses D4, D5 and D6 are connected to fetch or store data from or into any partition. Each partition has a separate directory element which may, for example, be on a stand alone associative array chip. Both the directory and cache partitions have address switches whereas just the cache partitions have data bus switches. The various address switches for the various partitions are shown schematically.

For example, partition 1 of cache 50 has an address switch 150 connected to the address bus 60A. Data bus switches 152 and 154 are also associated with the first partition. The directory element associated with the first partition has address switch 156 connected to the directory address bus 60B. The other cache partitions and directory elements are similarly organized. Note that the address bus 60 of FIGURES 2 and 3 is composed of two parts, address bus 60A and 60B of FIGURE 5B. Each port of address bus 60 is composed of three fields as shown in FIGURE 5B. The directory 38 requires the mid and high-order bits from each address port; whereas the cache requires the mid and low-order bits from each address port.

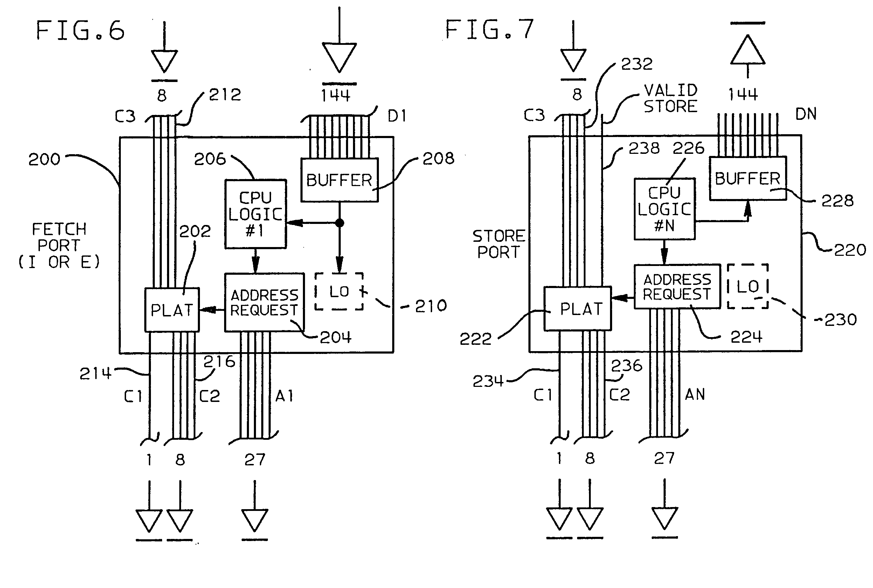

Referring now to FIGURES 6 and 7 two different embodiments of central processing ports are illustrated for use with the present invention. In FIGURE 6, a central processor port 200 is shown which may be used as a fetch port for either instructions or for data operands to be executed. The port contains a PLAT 202, an address request logic unit 204, a central processor instruction, logic, or arithmetic unit 206, an input buffer 208 and it may contain a local store 210. The PLAT has its C3 local output control line 212, its C1 global control line 214 and its local C2 input control line 216 shown together with the number of bits required for the operation in each case. The address generation unit 204 produces 27 bit addresses and the buffer unit 208 is designed to receive 144 bit quadword at a time.

In FIGURE 7, the CPU port 220 is configured as a storage port having a PLAT 222, an address request logic unit 224, a CPU logic unit 226, a data buffer 228, and a local store 230. Again, the PLAT has a C3 local output control line 232, a C1 global output control line 234 and a C2 local input control line 236. In addition, the PLAT has a valid store (V/S) line 238. Buffer 228 is designed to handle quadwords of 144 bits. The valid store line 238 is input to PLAT 222 so that when the port issues a store request, the valid store condition can be determined at the PLAT.

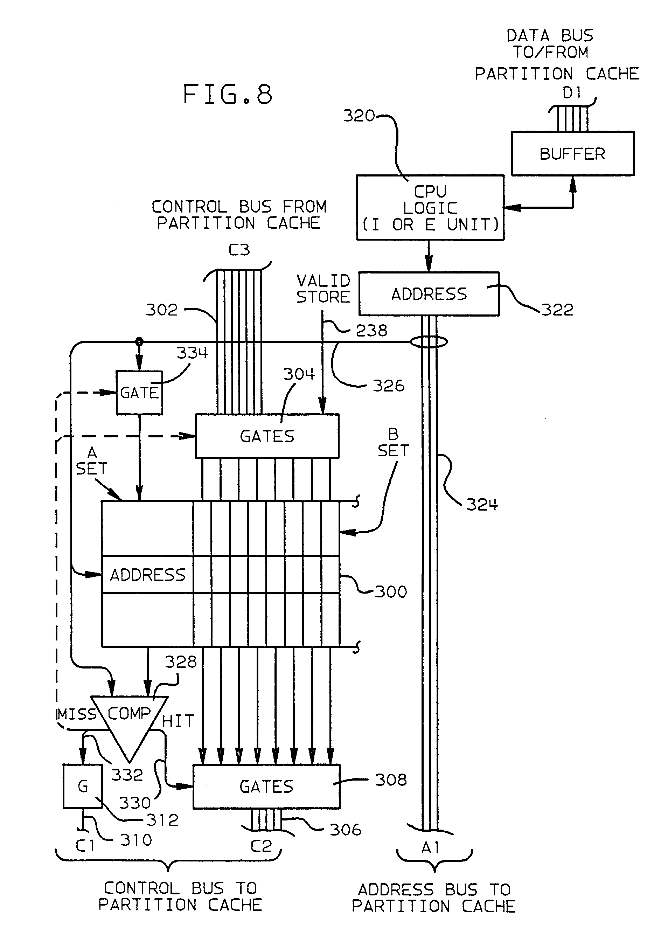

Referring now to FIGURE 8, the logic operation of a PLAT is illustrated. The C3 local output bus 302 emerges from a switching gate system 304 while the C2 local input control bus 306 is connected to a gate 308 and the C1 global control bus 310 is connected to a gate 312. A central processor unit 320 has an address generation mechanism 322 which provides addresses on an address bus 324 to the partitioned cache and also to the PLAT on bus 326. The address is provided to a comparator 328 which records either a hit on line 330 to gate unit 308 or a miss on line 332 to gate unit 312 depending upon whether a miss or a hit in the PLAT is recorded, the global control signal is sent on C1 line 310 or the C2 local control signal is sent on lines 306 showing the location in the partitioned memory found by the PLAT.

In the normal course of operation, the CPU 320 will invoke its address generation hardware 322 placing the requesting address on the output address bus 324. At the same time the address is sent to the PLAT 300 where one or more addresses of that congruence class are read from the PLAT array. The remaining high order bits of the address are compared for each PLAT set associative entry.

A PLAT hit will cause one of eight bits stored in the partition identifier array field of the PLAT to be outgated to the corresponding one of eight positions of the C2 control bus 306. This indicates a local request to the designated cache partition.

A PLAT miss will raise the single bit C1 global request line on bus 310. A PLAT miss will also enable the gates which store the requesting address and the partition identifier which is returned on the C3 control bus 302. A new entry is thus created in the PLAT in response to a global request. This new store entry in the PLAT is invoked by new store box 334 when it gets a miss indication from line 332 and it is able to place the address it receives from 324 into the address array of the PLAT 300.

In general the PLAT array 300 is a set-associative array. Multiple sets, Set A, Set B etc., are examined in parallel for each congruence address. Each set compartment of the PLAT has an individual set of output gates 308, address compare 328, global gate 312, input gates 304 and 334. The output gates 308 are "OR'ed together" since just one congruence address may hit on a PLAT cycle. In a similar manner, the outputs 310 from each set gate 312 are combined to form a single C1 request line. In this case, the outputs 310 are AND'ed together since a miss must occur from all set-associative comparators before a global request C1 is initiated on bus 310. On the input side of the PLAT, the address bus 326 and control bus 302 may be gated to any one of the set-associative compartments, to Set A or to Set B, etc., as determined by the LRU logic when a new PLAT entry is created.

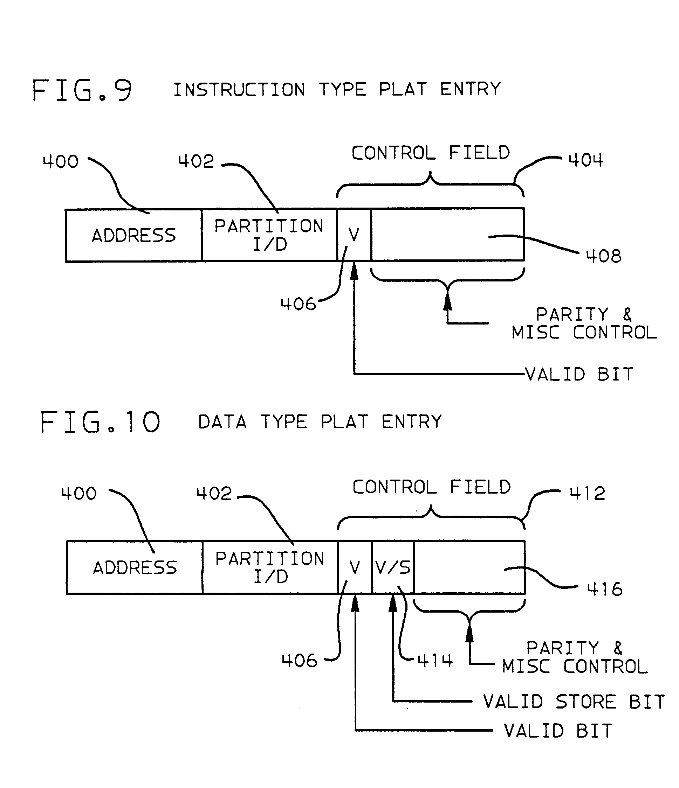

FIGURE 9 shows the type of PLAT entry data field which might be used for a PLAT design to deal with instructions. An address field 400 contains addresses while a partition identifier 402 shows the partition of the cache containing that address. A control field 404 is provided which contains a valid bit field 406 and a field 408 for parity and other miscellaneous control functions.

FIGURE 10 shows the type of PLAT entry which might be used for a data type of PLAT. An address field 400 is provided together with a partition identifier field 402. However, the control field 412 may be slightly different. A valid bit entry 406 is provided, and a valid store bit 414 is also included. In addition, an additional field 416 is provided for parity and other miscellaneous control functions as before. The PLAT type shown in FIGURES 9 and 10 is intended for possible operation in the presence of an expanded central processing unit CPU buffer which might take the form of a local cache (L0). In this case, the directory for the local cache and the PLAT may operate in parallel. After the address generate function occurs, the address is sent to the address request bus, the PLAT, the local cache directory, and the local cache array.

A hit in the local cache directory causes data to be outgated from the local cache array to the associated central processing element and the other address paths are to be disregarded. A miss at the local cache directory combined with a hit in the PLAT results in a local request to the L1 partitioned cache. A local directory miss combined with a PLAT miss results in a global request to the partitioned cache.

The difference between the two types of PLAT entry shown in FIGURES 9 and 10 is the presence of the valid store bit 414 in the data type PLAT entry. This bit is set to be on at the time that a new entry is created in the data type PLAT, which will be after a global request. At this time a store interrogate operation is executed at the partitioned cache directory. This involves testing the storage keys, valid bit, exclusive bit, and other functions in the cache. If this test is positive, then the valid store bit in the partitioned cache directory is set on for that new entry in the data type PLAT, otherwise it is set off. Any subsequent store request to that partitioned cache line while the entry remains valid in the PLAT, executes as a single cycle store. Such stores are transmitted as local store requests to the partitioned cache. Note that any invalidate issue to the partitioned cache is also issued to the associated PLAT.

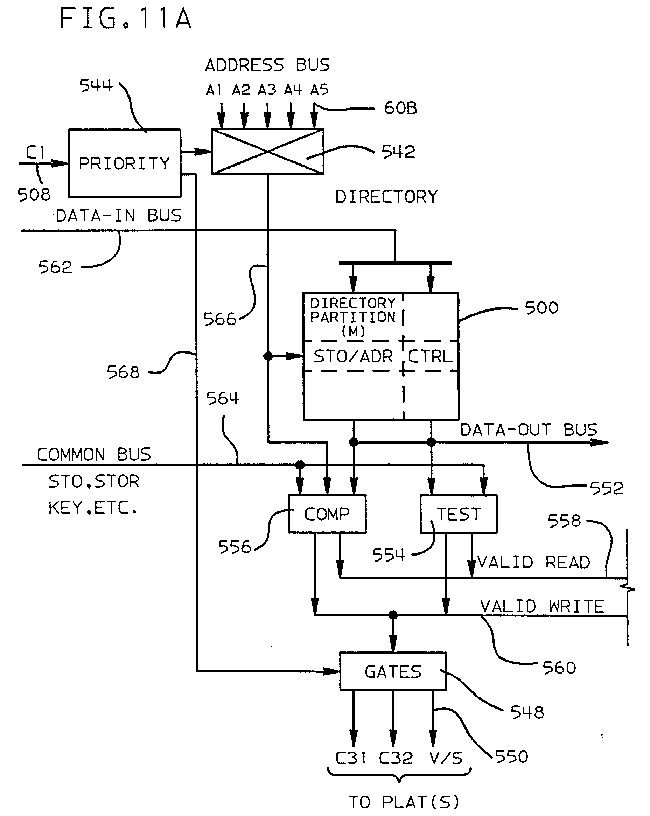

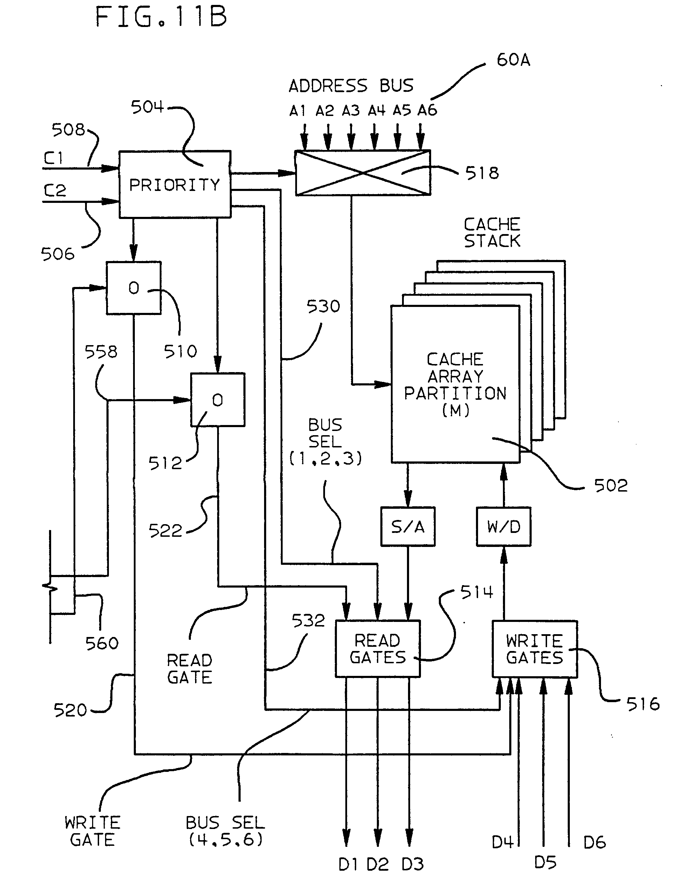

Referring now to FIGURES 11A and 11B which are viewed in left to right order, a partitioned cache is shown with its control and data flow paths. A directory partition is associated with a single cache array partition 502 shown with its stack of memory locations. A cache priority gate 504 receives the C2 local control bus 506 and C1 global control bus in 508, also shown in FIGURE 4A. The output of priority logic 504 is input to OR gates 510 and 512 as well as to read gate switch 514 and write gate switch 516. An address bus switch 518 receives an input from priority logic 504 and directs addresses to the cache array partition 502. The output of OR gate 510 is a write gate select bus 520 and the output of OR gate 512 is a read gate select bus 522. OR gate 510 receives an input 560 from directory 500 and OR gate 512 receives an input 558 from directory 500.

Cache directory 500 receives an input address bus 60B through an address bus switch 542. The address bus switch 542 is controlled by priority gate 544 which has as input, the C1 global control bus 508. Priority gate 544 also provides an output to gates 548 which have as an output the input control signals for the C3 local bus 550 which is connected to the associated PLAT. The output of the cache directory array 500 consists of a data out bus 552 and inputs to logic units 554 and 556. Units 554 and 556 produce a valid read output bus 558 and a valid write output bus 560 respectively.

To illustrate the operation of cache partition 502, priority logic unit 504 receives control bus inputs 506 and 508. If a local request is determined on the basis of C2 control input 506, one of six addresses is switched from the address bus to the cache array by address switch 518. The data bus which corresponds to the selected address is also selected by bus select control line 530 for read operations or bus select line 532 for writing operations. The read gate select line 522 or the write gate select line 520 are also enabled by the priority logic for local read and write requests. Thus, a cache partition may execute a single cycle store or fetch operation without use of the cache directory.

For fetch operation, the second clock cycle cache operation is used to transfer the requested data to the requesting central processor element. For store operations, the second cache cycle is not required.

If a global request is determined, the priority logic of the cache array 544 and the directory 500 select and switch a common address using switch 542. The cache array will likewise select the corresponding address bus with switch 518, as before, but in this case will not generate the read or write gate control lines 522 and 520 respectively. Instead, these lines are generated from the compare and test logic 554 and 556 of the directory 500. In the global case, the valid read line 558 enables the selected read gates to the selected data bus. The valid write line 560 enables the selected write gates such that the cache array 502 may execute the store operation on the following cycle. Thus, for a global request the first cycle of cache operation performs the array access and data bus switch for a fetch, and a store interrogate function for a store request. The second cycle of cache operation is used to transfer the requested data for a fetch or to cycle the cache array 502 for the store request. For global requests, the partition identifier and valid store lines are generated by gates 548 and returned on the C3 busses to update the new PLAT entry.

Global requests have a higher priority than any local request. Priority for both global requests and local requests will be determined by a predetermined sequence of port positions.

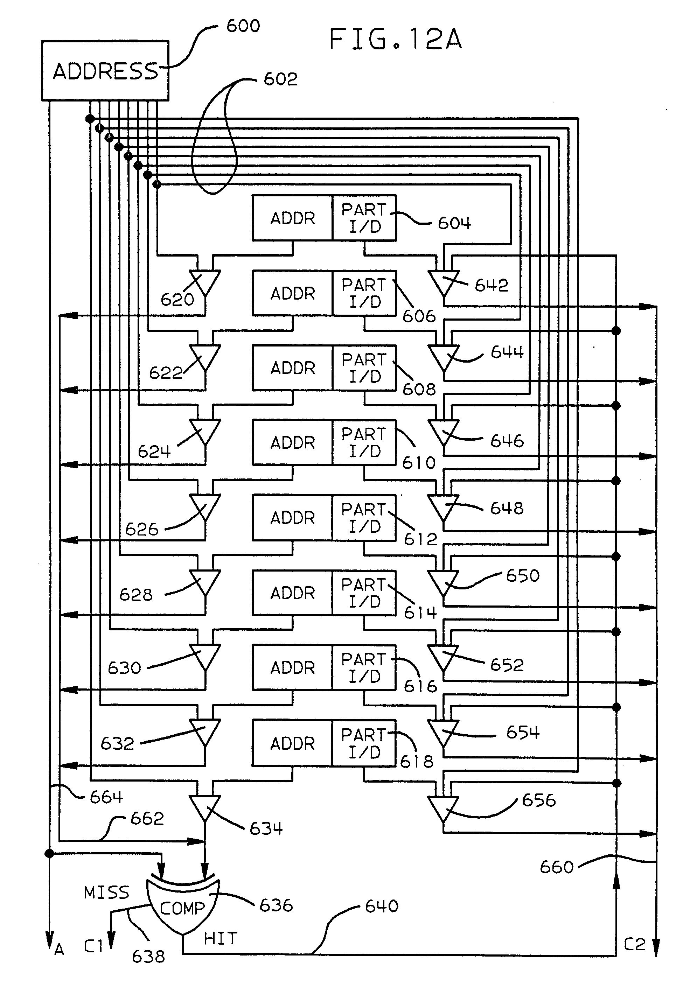

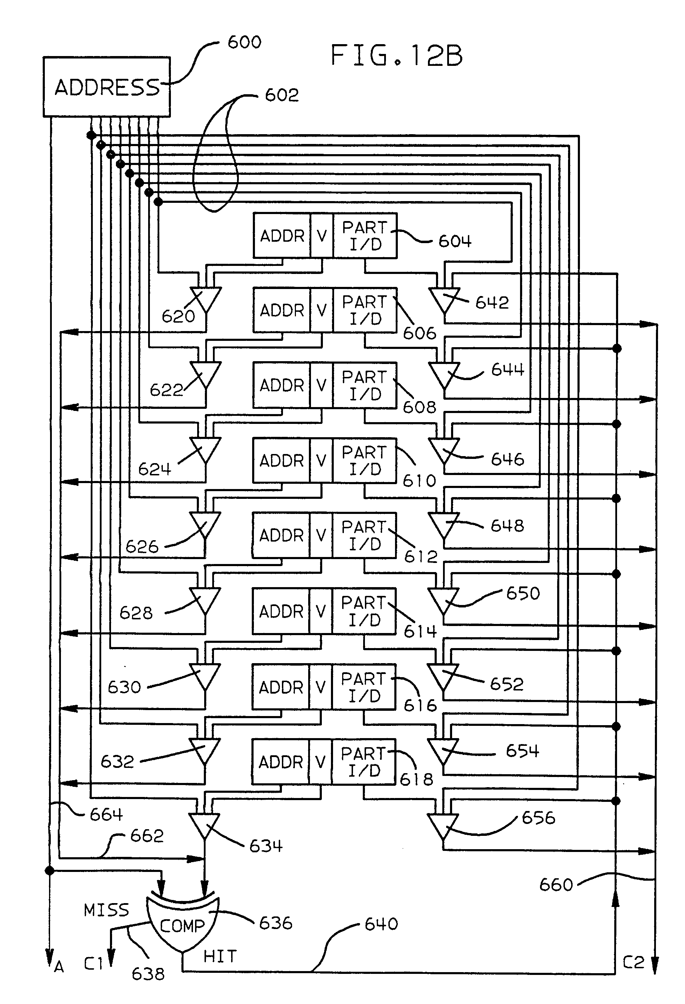

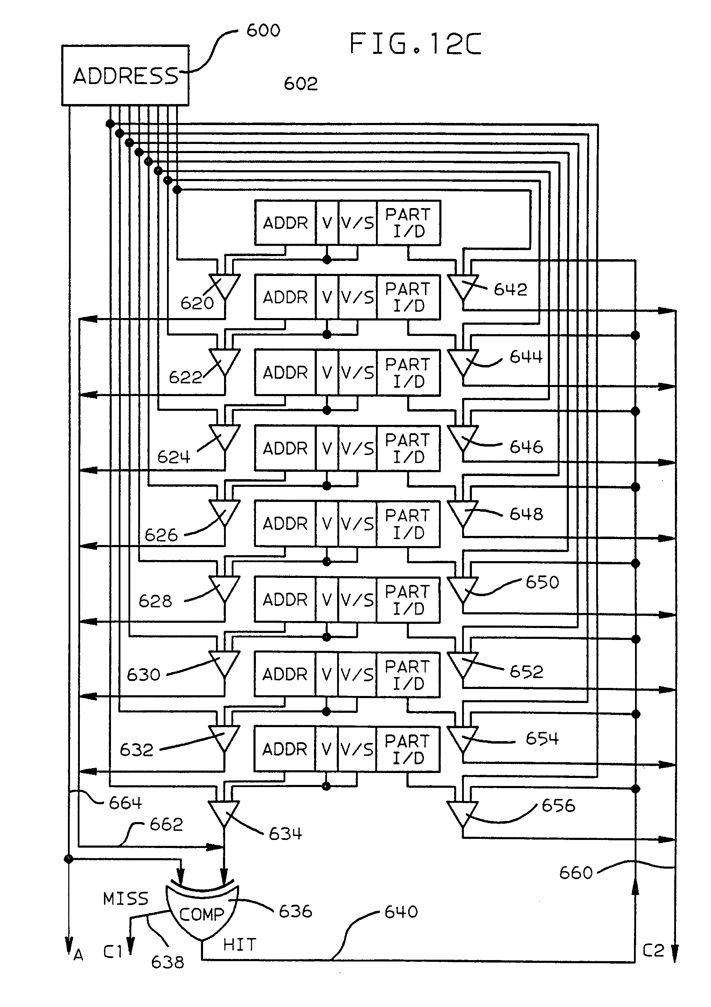

For simplicity, a small PLAT array is illustrated in FIGURE 12, one which can store eight entries each with contents as illustrated in FIGURES 9 and 10. In cache array terminology this array has eight congruence class address positions, and one set associativity, Set A. This array has dimensions $(8 \times 1)$. Larger PLAT arrays may be constructed by replicating the components of FIGURE 12. Each replication in the horizontal direction adds eight additional entries and one additional set; i.e. Set B $(8 \times 2)$, Set C $(8 \times 3)$, etc. Alternatively, each replication in the vertical direction adds eight additional entries, thereby increasing the congruence class addresses by eight while retaining a single set associativity, Set A. Such an array has dimension $(16 \times 1)$.

If, for example, 32 entries were determined to be an optimum number, the PLAT array could be arranged: $(8 \times 4)$, $(16 \times 2)$, or $(32 \times 1)$. In any chosen arrangement of the PLAT, the required number of comparators, 636 of FIGURE 12, is equal to the set associativity, one per set.

Also referring to FIGURE 12, the address generator 600 provides a decoded set of address lines 602 to the PLAT, the number of decoded lines are determined by the number of congruence classes.

The address bits used to decode the congruence class select lines are determined by the partitioned L1 cache line size, and are the "lowest-order" bits of the portion of the address normally used to address the L1 Directory, Address Bus 60B of FIGURE 5. For a PLAT with eight congruence classes, three lower-order bits are used to decode eight congruence class select lines, four low-order bits to decode sixteen, etc. In cases where the generated address is obtained from an AGEN adder, the AGEN adder may generate the decoded form of the congruence class select bus 602 directly, rather than generating the encoded form which would then require the decode operation.

Referring to FIGURES 12A and 5, the working of a PLAT is shown. Address generator 600 creates the requested address 664 and sends certain of these address bits to the cache on cache address bus 60A, to the directory on directory address bus 60B, and to the address compare circuit 636. Also, in parallel, address generator 600 sends the eight bit congruence line select bus 602 to the PLAT. For any requesting address just one of eight lines of bus 602 is active. Depending on the active line, one of eight addresses from PLAT entries 604, 606, 608, 610, 612, 614, 616, or 618 are gated to a common bus 662 to the compare circuit 636. Gates 620, 622, 624, 626, 628, 630, 632, or 634 perform the address gating. An equal comparison of the generated address 664 with the selected address 662 results in a positive hit on output line 640. Line 640 then provides a signal to gates 642, 644, 646, 648, 650, 652, 654 and 656 which combine with congruence lines select bus 602 to out-gate one of the partition I/D fields from the PLAT entries 604, 606, 608, 610, 612, 614, 616, or 618 to the common bus 660. The bus 660 is then sent to the partitioned cache as one of the local-in C2 components of control bus 64 of FIGURES 4A, 4B, 4C and 4D. An unequal comparison of compare circuit 636 results in a miss signal 638 on the C1 global request bus. The signal line 638 is sent to the partition cash and directory as one of the global-in C1 components of control bus 62 of FIGURES 4A, 4B, 4C and 4D.

FIGURE 12B is a variation of FIGURE 12A and is used for any CPU port assigned as a fetch port for instructions or data operands. Here, the valid bit, in addition to the address field, is gated from the PLAT entries 604 through 618 by gates 620 through 634 to common bus 662. The compare circuit 636 examines the valid bit input line in addition to performing the address compare as before. If the valid bit is yes, or valid, (cache conventions usually use the up or one state for invalid and the down or zero state for valid), then compare circuit 636 determines a hit on line 640 or a miss on line 634 based on the address compare operation as before. If the valid bit is no (invalid) then the miss line 638 is forced and the address compare operation is ignored.

Whenever a new entry is created in the PLAT, the valid bit is set to yes (zero state). However, during normal CPU processing events it may be necessary to set the entry invalid prior to aging the entry from the PLAT by LRU logic. Such events are, for example, if a new cache line is brought into the partitioned L1 cache then any entry in the PLAT referring to the old line is marked invalid. Also, in a multiple CPU environment, it is common that one CPU will request that another CPU mark a cache line invalid. In this case, any entry in the PLAT is also marked invalid. The actual occurrence of the need to invalidate a PLAT entry is very infrequent, but it is included for accuracy and completeness.

FIGURE 12C is a variation of FIGURE 12B and is used by any CPU port assigned as a store port for data operands. Here both the valid bit (V) and valid store bit (V/S) are gated from the PLAT entry to the compare circuit 636. In this case, both the valid state AND the valid store state must be present, in addition to the positive address compare state, before the hit condition is determined on line 640. If either the valid state OR the valid store state conditions are not present, then the miss line 638 is again forced, and the address compare is ignored. Whenever a new entry is created in the PLAT due to a PLAT miss, the store interrogate operation is performed at the L1 directory. If this test is positive, then the valid store state is recorded in the PLAT entry. Subsequent store requests result in PLAT hits on line 640 and do not require the store interrogate operation in the directory.

In normal cache operation, it is not unusual to have a valid, read only data line in L1 cache, as well as a valid entry in the PLAT corresponding to that line. If the line had been requested "read only" by the L1 cache, then the store interrogate test would be negative and the invalid store state would be set in the PLAT for that entry. A subsequent store request to that line would result in a PLAT miss and a global request of the L1 directory. The read only state would then be determined, and the L1 cache controls would request the store-privilege-state from the SCE element of FIGURE 1. When the store privilege is eventually granted, the store-privilege-state is recorded in the L1 directory. Then any subsequent store request to that line may result in a positive indicator from the store interrogate test, and the valid-store indicator set in the PLAT entry.

FIGURE 13 shows a special, fault tolerant feature of this partitioned cache. This feature tolerates major failures of the cache data array and directory components while avoiding a system outage or interruption of service to the user of the computer. Such failures would result in a degraded performance of the cache subsystem for the period of time until a repair action corrects the fault(s). For example, an entire directory element may fail (called a chip kill) or one to all of the data chips associated with a single cache partition may fail. In these cases the failed partition is logically decoupled from the cache subsystem resulting in a 12.5% loss in the cache capacity for a partitioned cache with eight partitions (note that a 12.5% loss in cache capacity does not result in a 12.5% degradation of service, but rather a substantially smaller percent due to the nature of cache performance as a function of its capacity). A second major such failure prior to the repair action would result in the loss of a second partition and a combined reduction in cache capacity of 25%, etc. For the above cases in present cache subsystems, the entire CPU would be lost until the repair action was completed. To most users a small loss in performance during critical operating periods is acceptable, whereas a computer outage could have severe consequences.

The basis for the fault tolerance is that cache data associated with a particular cache line is totally contained within a single cache partition and its address control information is totally contained within a single directory element which may be on a single chip. Also, a store-through L1 cache is used. This provides a duplicate, valid copy of all L1 cache data in at least one higher level of the storage hierarchy. Thus, if a major failure as described should occur, the hardware detects the failure and decouples the failed partition(s), but no data is lost. In effect, the data resident in the failed and decoupled partition(s) will be refetched, L2 to L1, on demand by the processor but into a different partition of the cache which is still functional. In essence, the data in the failed partition(s) appears to the CPU the same as any non-resident cache data which must be fetched on an L1 miss.

The operation of the fault tolerant mechanism is shown in FIGURE 13. Hardware fault test logic 40 is active during all cache transactions. This includes, for example, parity testing of address, data and control busses 36 and 39 in a conventional manner. An invalid partition indicating register 702 is provided to store eight bits, each bit corresponding to one of eight cache partitions. Should a major failure occur, fault test hardware 40 sets on the corresponding bit in invalid partition indicating register 702 with input bus 700. Also, provided are LRU logic and tables 708. In normal events, LRU logic 708 monitors cache address bus 60A and cache control busses C2, 64 and C3, 66, and maintains an up-to-date LRU array 712. The C2 control bus indicates the active accessed partition number for local cache references; whereas the C3 control bus indicates the active responding partition number for global cache references. This array 712 stores one encoded entry for each congruence class of the cache 34 and directory 38. In essence each entry in the LRU array 712 stores a pointer, or partition number, of the partition to be used next to store the new line if a cache miss occurs. A conventional, partitioned LRU algorithm may also be used to maintain the current LRU entries in the LRU array.

The LRU logic 708 also monitors the contents of the invalid partition indication register 702 on bus 704. Should any bit, or bits, be set on in 702, these bits act as an override to the LRU logic 708, such that those partitions will not be selected as input to the LRU array 712. Rather, LRU 708 will choose LRU entries to array 712 based on valid partition indicators in the register 702. Whenever an L1 cache miss occurs, the requesting address is sent to the LRU array 712 on bus 714. The LRU array 712 loads the partition number corresponding to that requesting address congruence class onto bus 716, which is sent to the line fetch buffer 110 and is stored in partition number (PN) register 720. The requesting address is also sent to buffer 110 and is stored in address register (AR) register 724. The new line fetch is sent to buffer 110 from L2 on bus 112 and is stored in buffer 726. The line put away operation follows the line fetch operation. Here the cache request address A6 is placed on bus 60, the partition identity, C2 control bus, is placed on bus 64 by decoder 722, and the line data is placed on the store-bus port N of FIGURE 2 and FIGURE 13.

The hardware of FIGURE 13 decouples the failed partition(s) from future assignment of new cache data until a repair action corrects the fault(s). The time of the repair action occurrence is chosen at the convenience of the user. At this time the contents of the invalid partition indicating register 702 are returned to the valid state. Also, at the time of detection of a fault occurrence, certain housekeeping tasks are understood. These include a scan of the LRU array on bus 718 to reset any invalid entry based on the new value of the invalid partition indicating register 702. Also, all PLAT arrays should be cleared so that no partition indicators point to faulty partitions, and inhibit addresses on address busses 60A and 60B directed to faulty partition(s) as determined by register 702.

Some additional features of the overall operation of the partitioned cache and PLAT according to the present invention will now be discussed.

One of the features is that a majority of store operations will now be completed in a single cache cycle. This is achieved by the elimination of the store interrogate cycle from each local store operation of the cache. The store interrogate operation will be performed once on global store or fetch operations due to a PLAT miss. At this time a new entry occurs in the PLAT, and a valid or invalid store bit is set for that entry. Subsequent store requests with the valid store bit on in the PLAT will execute in a single cycle. Single cycle store operations will reduce the number of cycles required for a store instruction, and reduce the average cycles per instruction overall, thereby increasing the processor instruction execution speed.

The line put-away operation will be accomplished with minimum partition cache interference to the central processor. Put-away partition cache store cycles from a line fetch buffer will busy just one of the (M) partitions and will be activated only for those cycles when that partition is otherwise idle. This will allow larger cache lines to be used advantageously thereby improving the ratio of cache instructions per miss and improved PLAT hit ratios.

The critical cache access paths are contained within two chip crossings of presently available chips for all (N) parallel operational ports. This means that each of N simultaneously operative ports have one or two cycles of access. Local stores including line put away operations execute in a single cycle access per store block, while all other operations have a two-cycle access. Present single-ported cache organizations have a two-cycle access for both stores and fetches and are restricted to one operation per cycle.

The partitioned cache has greater availability due to high fault tolerant features. Conventional cache structures carry parity checking but not error correction. If a single bit hard error occurs to a cache line or directory bin, then a delete bit carried in the directory may be set by hardware controls to decouple that cache compartment for further use until a repair operation is necessary. Both the conventional and partitioned cache uses decoupled failure mechanism. However if a complete cache or directory chip is lost, creating a chip kill, a system failure results in a conventional cache for the entire cache. The partitioned cache extends the delete bit concept to delete partition. Thus, for a chip kill, one partition of the cache is lost and a system failure is avoided.

A variety of designs are available to vary the output data block size associated with the individual cache ports and data busses. Variations of the base cache design, including provisions for a central processor design which uses a separate L0 cache structure are possibilities.

## Claims

1. Cache memory with M partitions of independently addressed set associative memory in a single memory complex, characterized

by address bus switching means (58) for providing N ports of address access to said M partitions where N is less than or equal to M;

by data bus switching means (52) for providing N ports of data access to said M partitions;

by control means (54, 56) for controlling said address bus switching means (58) for switching addresses to selected partitions of said set associative memory and for controlling said data bus switching means (52) for switching inputs and outputs of said partitions to selected data busses; and

by partition look aside table (PLAT) means (100, 102, ..., 108) for receiving memory requests and controlling said address bus and said data bus switching means, whereby each of the PLAT means contains entries associating addresses with partition location identifiers,

by local control out means (66) connected from each of said M cache partitions to the PLAT means where each of said M partitions makes a request identifiable to it, said means identifying to the PLAT means the partition identifier for a new PLAT entry;

by local control in means (64) connected from the PLAT means to each of said M cache partitions for making an access request specific to a particular partition;

by global request control means (62) for making an access request of all of said M partitions simultaneously, and wherein;

by control means in the PLAT means for activating said global request control means in response to a PLAT miss to an access request.

2. Cache memory of claim 1, characterized in that in the PLAT means a global memory request is issued to all M partitions of said cache when a particular partition cannot be identified for a memory operation.

3. Cache memory of claim 1, characterized in that in the PLAT means a plurality of PLATs are each associated with a memory using element so that each memory using element may direct requests to its own PLAT.

4. Cache memory of claim 1 including at least two PLATs, one of which is designed to operate in the memory read mode and the other of which is designed to operate in the memory write mode.

5. Cache memory of claim 1 including at least two PLATs, one of which is an instruction entry handling PLAT type and the other of which is a data handling PLAT type.

6. Cache memory of claim 1, characterized in that each PLAT means (100, 102, ..., 108) contains entries associating addresses with partition location identifiers and in which each entry further includes a valid bit (V) and a valid/store bit (V/S), wherein the valid bit indicates if the partition entry for an address is valid or should be ignored and the valid/store bit indicates that a store interrogate operation has been made.

7. Cache memory of claim 1, characterized by fault test logic means (40) for determining if one of said partitions has failed; invalid partition indicating register (702) having a position for each of M partitions and for receiving and storing an indication from said fault test logic means (40) that a partition has failed; and means (708, 712, 720, 722) for assigning new storage requests to selected partitions of said cache connected to said invalid partition indicating register (702) whereby said means for assigning is responsive to said invalid partition indicating register so that new storage requests are not assigned to a failed partition.

8. Cache memory of claim 7, characterized in that means for assigning new storage requests is at least recently used logic unit (712) which sets the next partition to be used in advance at the time of a storage request.

9. Cache memory of claim 1, characterized in that the PLAT means includes means for storing a valid bit, a valid store bit and a partition identifier for each address in the PLAT whereby both the valid bit and the valid store bit must be present in addition to the address in order to get a PLAT hit for store requests and further including a cache directory for said cache, means for setting said valid store bit when a PLAT entry is created for both a store or fetch operation in response to a PLAT miss and means for making a store interrogate operation of said cache directory in response to a PLAT miss.

10. Cache memory of claim 9, characterized by logic means for setting said valid store bit and for reading said valid store bit so that if said bit is off, a PLAT miss will occur for a store request to the associated address and a PLAT hit will occur for a read request to the associated address.

11. Cache memory of claim 1, characterized by line fetch buffer means (110) for storing new lines into cache on request wherein said line fetch buffer means requires access to a single selected cache partition when storing the contents of said line fetch buffer means into cache and all other cache partitions operate normally; and by means for identifying selected partitions with memory requests in a table and for receiving memory requests and controlling said address bus and said data bus switching means to direct a memory request to a selected single partition as a result of information contained in said means for identifying selected partitions in the case of a read operation and to direct a memory request to a single selected partition in the case of a store operation.

12. Cache memory of claim 11, wherein said means for identifying selected partitions is comprised of a plurality of PLAT means wherein each PLAT means is characterized by at least one set of set associative registers (300) for holding cache address identifiers arranged in at least M congruency classes; means for receiving an input address request (322); comparator means (328) for comparing the contents of said set of set associative registers with said means for receiving an input address request and providing a partition identifier if a hit occurs and a miss indication if no compare is made.

13. Cache memory of claim 12 wherein at least one of said PLAT means is characterized by means for storing and associating a valid store bit with each address and partition identifier and logic means for causing a PLAT miss for a write request to an address for which the bit is not set and for allowing a read request when the bit is either set or not set.

14. The PLAT means of claim 12 in which a global memory request is issued to all M partitions of said cache when a particular partition cannot be identified for a memory read operation.

15. The PLAT means of claim 12 in which a plurality of PLATs are each associated with a memory using element so that each memory using element may direct requests to its own PLAT.

16. The PLAT means of claim 12 including at least two PLATs, one of which is designed to operate in the memory read mode and the other of which is designed to operate in the memory write mode.

17. The PLAT means of claim 12 including at least two PLATs, one of which is an instruction entry handling PLAT type and the other of which is a data handling PLAT type.

18. Cache memory of any of claims 1 - 17, characterized in that a plurality of selected cache operations may occur on each cache cycle with one operation occurring at each partition associated with a port for that cache cycle.

19. Cache memory of any of claims 1 - 18, characterized in that each PLAT contains entries associating addresses with partition location identifiers and in which each entry further includes a valid bit (V) and a valid/store bit (V/S), wherein the valid bit indicates if the partition entry for an address is valid or should be ignored and the valid/store bit indicates that a store interrogate operation has been made.

**Revendications**

1. Antémémoire comportant M subdivisions de mémoire à associativité d'ensembles et adressage indépendant dans un même complexe de mémoire, caractérisée par

des moyens de commutation de bus d'adresse (58) pour fournir N ports d'accès d'adresse auxdites M subdivisions, M étant inférieur ou égal à M ;

des moyens de commutation de bus de données (52) pour fournir N ports d'accès de données auxdites M subdivisions ;

des moyens de commande (54,56) pour commander lesdits moyens de commutation de bus d'adresse (58), afin de commuter les adresses vers des subdivisions choisies de ladite mémoire à associativité d'ensembles, et pour commander lesdits moyens de commutation de bus de données (52) afin de commuter les entrées et les sorties desdites subdivisions vers des bus de données choisis ;

des tables de conversion de subdivision (PLAT) (100,102,...,108) pour recevoir des demandes de mémoire et commander lesdits moyens de commutation de bus d'adresse et lesdits moyens de commutation de bus de données, de sorte que chacun des PLAT contient des entrées associant des adresses avec des identificateurs d'emplacement de subdivision,

des moyens de sortie de commande locale (66) allant de chacune desdites M subdivisions d'antémémoire aux PLAT où chacune desdites M subdivisions présente une demande qui lui est identifiable, lesdits moyens spécifiant aux PLAT l'identificateur de subdivision pour une nouvelle entrée de PLAT ;

des moyens d'entrée de commande locale (64) allant des PLAT à chacune desdites M subdivisons d'antémémoire pour présenter une demande d'accès spécifique à une subdivision particulière ;

des moyens de commande de demande globale (62) pour effectuer une demande d'accès de toutes lesdites M subdivisions simultanément ; et

des moyens de commande prévus dans les PLAT pour activer lesdits moyens de commande de demande globale en réponse à un insuccès de PLAT faisant suite à une demande d'accès.

2. Antémémoire suivant la revendication 1, caractérisée en ce que, dans les PLAT, une demande de mémoire globale est envoyée à toutes les M subdivisions de ladite antémémoire lorsqu'une subdivision particulière ne peut pas être identifiée pour une opération de mémoire.

3. Antémémoire suivant la revendication 1, caractérisée en ce que, dans les PLAT, une pluralité de PLAT sont associés chacun à un élément d'utilisation de mémoire, de sorte que chaque élément d'utilisation de mémoire peut diriger des demandes vers son propre PLAT.

4. Antémémoire suivant la revendication 1, comprenant au moins deux PLAT dont l'un est prévu pour fonctionner en mode de lecture de mémoire et dont l'autre est prévu pour fonctionner en mode d'écriture de mémoire.

5. Antémémoire suivant la revendication 1, comprenant au moins deux PLAT dont l'un est un type de PLAT de gestion d'entrée d'instruction et l'autre est un type de PLAT de gestion de données.

6. Antémémoire suivant la revendication 1, caractérisée en ce que chaque PLAT (100,102,...,108) contient des entrées associant des adresses avec des identificateurs d'emplacement de subdivision, et dans laquelle chaque entrée comprend en outre un bit de validité (V) et un bit de validité d'enregistrement (V/S), le bit de validité indiquant si l'entrée de subdivision pour une adresse est valable ou si elle doit être ignorée, et le bit de validité d'enregistrement indiquant qu'une opération d'interrogation d'enregistrement a été effectuée.

7. Antémémoire suivant la revendication 1, caractérisée par

des moyens logiques de test d'erreur (40) pour déterminer si une desdites subdivisions était défaillante;

un registre d'indication de subdivision non valable (702) ayant une position pour chacune des M subdivisions, afin de recevoir et de stocker une indication, fournie par lesdits moyens logiques de test d'erreur (40), qu'une subdivision a été défaillante ; et

des moyens (708,712,720,722) pour affecter les nouvelles demandes de stockage à des subdivisions choisies de ladite antémémoire connectées audit registre d'indication de subdivision non valable (702), lesdits moyens d'affectation répondant audit registre d'indication de subdivision non valable de manière telle que les nouvelles demandes de stockage ne sont pas affectées à une subdivision défaillante.

8. Antémémoire suivant la revendication 7, caractérisée en ce que les moyens d'affectation des nouvelles demandes de stockage comprennent une unité logique de plus grande ancienneté (712) qui détermine la subdivision suivante à utiliser, préalablement à l'instant d'une demande de stockage.

9. Antémémoire suivant la revendication 1, caractérisée en ce que les PLAT comprennent des moyens de stockage d'un bit de validité, d'un bit de validité d'enregistrement et d'un identificateur de subdivision pour chaque adresse dans le PLAT, de sorte que le bit de validité et le bit de validité d'enregistrement doivent tous deux être présents en plus de l'adresse afin d'obtenir un succès de PLAT à la suite de demandes d'enregistrement, et ils comprennent en outre un répertoire d'antémémoire pour ladite antémémoire, des moyens d'établissement dudit bit de validité d'enregistrement à l'état actif lorsqu'une entrée de PLAT est créée pour une opération d'enregistrement ou une opération d'extraction en réponse a un insuccès de PLAT, et des moyens d'exécution d'une opération d'interrogation d'enregistrement dudit répertoire d'antémémoire en réponse à un insuccès de PLAT.

10. Antémémoire suivant la revendication 9, caractérisée par des moyens logiques pour établir ledit bit de validité d'enregistrement et pour lire ledit bit de validité d'enregistrement de sorte que, si ledit bit est inactif, un insuccès de PLAT se produira pour une demande d'enregistrement à l'adresse associée et un succès de PLAT se produira pour une demande de lecture à l'adresse associée.

11. Antémémoire suivant la revendication 1, caractérisée par

un tampon d'extraction de ligne (110) pour stocker de nouvelles lignes dans l'antémémoire à la demande, de sorte que ledit tampon d'extraction de ligne nécessite l'accès à une seule subdivision d'antémémoire choisie, lors du stockage du contenu dudit tampon d'extraction de ligne dans l'antémémoire, et toutes les autres subdivisions d'antémémoire fonctionnent normalement ; et

des moyens d'identification des subdivisions choisies avec des demandes de mémoire dans une table, et de réception des demandes de mémoire et de commande desdits moyens de commutation de bus d'adresse et de bus de données de manière à diriger une demande de mémoire vers une subdivision choisie unique comme résultat des informations contenues dans lesdits moyens d'identification de subdivisions choisies, dans le cas d'une opération de lecture, et de manière à diriger une demande de mémoire vers une subdivision choisie unique dans le cas d'une opération d'enregistrement.

12. Antémémoire suivant la revendication 11, dans laquelle lesdits moyens d'identification de subdivisions choisies comprennent une pluralité de PLAT, chaque PLAT étant caractérisé par

au moins un ensemble de registres à associativité d'ensembles (300) pour contenir des identificateurs d'adresse d'antémémoire agencés en au moins M classes de congruence ;

des moyens de réception d'une demande d'adresse d'entrée (322) ; et

des moyens de comparaison (328) pour comparer le contenu dudit ensemble de registres à associativité d'ensembles avec lesdits moyens de réception d'une demande d'adresse d'entrée et fournir un identificateur de subdivision si un succès est obtenu, et une indication d'insuccès s'il n'y a pas de concordance.

13. Antémémoire suivant la revendication 12, dans laquelle au moins un desdits PLAT est caractérisé par :

des moyens de stockage et d'association d'un bit de validité d'enregistrement avec chaque adresse et identificateur de subdivision, et

des moyens logiques pour provoquer un insuccès de PLAT dans le cas d'une demande d'écriture à une adresse pour laquelle le bit n'est pas actif, et pour autoriser une demande de lecture lorsque le bit est actif ou inactif.

14. Groupe PLAT suivant la revendication 12, dans lequel une demande de mémoire globale est envoyée à toutes les M subdivisions de ladite antémémoire lorsqu'une subdivision particulière ne peut pas être identifiée pour une opération de lecture de mémoire.

15. Groupe PLAT suivant la revendication 12, dans lequel une pluralité de PLAT sont associés chacun à un élément d'utilisation de mémoire de sorte que chaque élément d'utilisation de mémoire peut diriger des demandes vers son propre PLAT.

16. Groupe PLAT suivant la revendication 12, comprenant au moins deux PLAT dont l'un est prévu pour travailler dans le mode de lecture de mémoire et dont l'autre est prévu pour travailler dans le mode d'écriture de mémoire.

17. Groupe PLAT suivant la revendication 12, comprenant au moins deux PLAT dont l'un est un type de PLAT de gestion d'entrée d'instruction et dont l'autre est un type de PLAT de gestion de données.

18. Antémémoire suivant une quelconque des revendications 1 à 17, caractérisée en ce qu'une pluralité d'opérations d'antémémoire choisies peuvent avoir lieu à chaque cycle d'antémémoire, une opération ayant lieu à chaque subdivision associée à un port pour ce cycle d'antémémoire.

19. Antémémoire suivant une quelconque des revendications 1 à 18, caractérisée en ce que chaque PLAT contient des entrées associant des adresses à des identificateurs d'emplacement de subdivision, et dans laquelle chaque entrée comprend en outre un bit de validité (V) et un bit de validité/enregistrement (V/S), le bit de validité indiquant si l'entrée de subdivision pour une adresse est valable ou doit être ignorée, et le bit de validité/ enregistrement indiquant qu'une opération d'interrogation d'enregistrement a été effectuée.

**Patentansprüche**

1. Cachespeicher mit M Partitionen eines unabhängig adressierten assoziativ gesetzten Speichers in einem einzigen Speicherkomplex, gekennzeichnet durch Adreßbus-Schaltmittel (58) zur Herstellung von N Anschlüssen für Adressenzugriff zu diesen M Partitionen, wobei N kleiner als oder gleich M ist; durch Datenbus-Schaltmittel (52) zur Herstellung von N Anschlüssen für Datenzugriff zu diesen M Partitionen; durch Steuermittel (54, 56) zur Steuerung dieser Adreßbus-Schaltmittel (58) zur Schaltung von Adressen zu ausgewählten Partitionen des assoziativ gesetzten Speichers und zur Steuerung dieser Datenbus-Schaltmittel (52) zur Schaltung der Eingänge und Ausgänge dieser Partitionen zu ausgewählten Datenbussen; und durch Partition-Umsetztabellen (PLAT) (100, 102,..., 108) die Speicheraufrufe empfangen und die Adreßbus- und Datenbus-Schaltmittel steuern, wobei jede dieser PLAT-Mittel Einträge enthalten, die den Adressen Partitionenplatz-Kennzeichen zuordnen, durch örtliche Aus-Steuermittel (66) zwischen jeder der M Cachepartitionen und den PLAT-Mitteln, wobei jede der M Partitionen eine Anfrage identifizierbar macht, indem diese Mittel den PLAT-Mitteln das Partitionen-Kennzeichen für eine neue PLAT-Eintragung identifizieren; durch örtliche Ein-Steuermittel (64) zwischen jeder der M Cachepartitionen und den PLAT-Mitteln, um eine Zugriffsanforderung zu einer speziellen Partition zu machen; durch globale Anforderungs-Steuermittel (62) um eine Zugriffsanforderung für alle M Partitionen gleichzeitig zu machen, und durch Steuermittel in den PLAT-Mitteln zur Aktivierung dieser globalen Anforderungs-Steuermittel als Antwort auf einen PLAT-Ausfall auf eine Zugriffsanforderung.

2. Cachespeicher nach Anspruch 1, dadurch gekennzeichnet, daß in den PLAT-Mitteln ein globaler Speicheraufruf für alle M Partitionen des Cachespeichers erzeugt wird, wenn für eine Speicheroperation eine bestimmte Partition nicht identifiziert werden kann.

3. Cachespeicher nach Anspruch 1, dadurch gekennzeichnet, daß in den PLAT-Mitteln mehrere PLATs jeweils einem Speicherbenutzungselement zugeordnet sind, so daß jedes Speicherbenutzungselement Aufrufe an die eigene PLAT richten kann.

4. Cachespeicher nach Anspruch 1, mit wenigstens zwei PLATs, von denen die eine so ausgebildet ist, daß sie im Speicherlesemode und die andere so ausgebildet ist, daß sie im Speicherschreibmode arbeitet.

5. Cachespeicher nach Anspruch 1, mit wenigstens zwei PLATs, von denen die eine vom PLAT-BefehlseingabeBearbeitungstyp und die andere vom Datenverarbeitungs-PLAT-Typ ist.

6. Cachespeicher nach Anspruch 1, dadurch gekennzeichnet, daß jedes der PLAT-Mittel (100, 102, ..., 108) Einträgen zugeordnete Adressen mit Partitionenplatz-Kennzeichen und jeder Eintrag ferner ein Gültig-Bit (V) und ein Gültiger-Speicher-Bit (V/S) enthält, wobei das Gültig-Bit anzeigt, daß der PartitionenEintrag für eine Adresse gültig ist oder ignoriert werden sollte und das Gültiger-Speicher-Bit anzeigt, daß eine Speicherabfrage-Operation durchgeführt wurde.

7. Cachespeicher nach Anspruch 1, gekennzeichnet durch
Fehlertestlogikmittel (40) zur Bestimmung ob eine der Partitionen nicht ausgefallen ist;
Anzeigeregister (702) für ungültige Partitionen, das eine Stufe für jede der M Partitionen und für den Empfang und die Speicherung eines Anzeigers für eine ausgefallene Partition von den Fehlertestlogikmitteln (40) aufweist und Mittel (708, 712, 720, 722) die neue Speicheranforderungen ausgewählten Partitionen des Caches zuordnen, das mit dem die ungültigen Partition anzeigenden Register (702) verbunden ist, wobei besagte Mittel für die Zuordnung auf das die ungültige Partition anzeigende Register reagiert, so daß neuerliche Speicheranforderungen nicht einer ausgefallenen Partition zugeleitet werden.

8. Cachespeicher nach Anspruch 7, dadurch gekennzeichnet, daß die Mittel zur Zuordnung neuer Speicheranforderungen die zuletzt benutzte Logikeinheit (712) ist, die die nächste zu benutzende Partition vorab auf die Zeit einer Speicheranforderung einstellt.

9. Cachespeicher nach Anspruch 1, dadurch gekennzeichnet, daß das PLAT-Mittel Speichermittel zur Speicherung eines Gültig-Bits, eines Gültiger-Speicher-Bits und eines Partitionen-Kennzeichens für jede Adresse in der PLAT enthalten, wobei sowohl das Gültig-Bit als auch das Gültiger-Speicher-Bit zusätzlich zu der Adresse vorhanden sein müssen, um einen PLAT-Treffer für Speicheranfragen zu erhalten, und daß ferner ein Cacheverzeichnis für den Cache, Mittel zur Einstellung des besagten Gültiger-Speicher-Bits bei einem PLAT-Eintrag für eine Speicheroder Leseoperation auf einen PLAT-Ausfall erzeugt wird und Mittel um eine Abfrageoperation des Cacheverzeichnisses nach einem PLAT-Ausfall zu erzeugen, vorgesehen sind.

10. Cachespeicher nach Anspruch 9, gekennzeichnet durch logische Mittel zur Einstellung des Gültiger-Speicher-Bits und zum Lesen des Gültiger-Speicher-Bits, So daß wenn besagtes Bit "aus" ist, ein PLAT-Ausfall für einen Schreibzugriff zu der zugeordneten Adresse und ein PLAT-Treffer für einen Lesezugriff zu der zugeordneten Adresse auftritt.

11. Cachespeicher nach Anspruch 1, gekennzeichnet durch
Leitungszugriff-Puffermittel (110) zur Speicherung neuer Leitungen in den Cache auf Anforderung, wobei die Leitungszugriff-Puffermittel Zugriff zu einer einzigen ausgewählten Cachepartition fordern, wenn der Inhalt dieser Leitungszugriff-Puffermittel in den Cache gespeichert wird und alle anderen Cachepartitionen normal arbeiten; und
Mittel zum Kennzeichnen ausgewählter Partitionen mit Speicheranforderungen in einer Tabelle, zum Empfang von Speicheranforderungen und zur Steuerung der Adreßbus- und Datenbus-Schaltmittel um Speicheraufrufe an eine ausgewählte Partition abhängig von Information in besagten Mitteln zur Kennzeichnung ausgewählter Partitionen im Falle einer Leseoperation und um einen Speicheraufruf zu einer ausgewählten Partition im Falle einer Schreiboperation zu leiten.

12. Cachespeicher nach Anspruch 11, in welchem die Mittel zur Kennzeichnung ausgewählter Partitionen aus mehreren PLAT-Mitteln bestehen und jedes PLAT-Mittel gekennzeichnet ist durch,
wenigstens einen Satz von assoziativ gesetzten Registern (300) für die Speicherung von Cache- Adreßkennzeichen, die in wenigstens M entsprechenden Klassen angeordnet sind;
Mittel zum Empfang einer Eingabe-Adreßanforderung (322);
Vergleichsmittel (328) zum Vergleich der Inhalte des Satzes der assoziativ gesetzten Register mit den Mitteln zum Empfang einer Eingabe-Adreßanforderung und zur Erzeugung eines Partitionen-Kennzeichens, wenn ein Treffer vorliegt und eine Ausfallanzeige, wenn kein positiver Vergleich vorliegt.

13. Cachespeicher nach Anspruch 12 in welchem wenigstens eines der PLAT-Mittel gekennzeichnet ist durch
Mittel zur Speicherung und Zuordnung eines Gültiger-Speicher-Bits zu jedem Adreß- und Partitionen-Kennzeichen und logische Mittel zur Erzeugung eines PLAT-Ausfalls für einen Schreibzugriff zu einer Adresse für welche des Bit nicht gesetzt ist und zur Ermöglichung eines Lesezugriffs, wenn das Bit weder gesetzt noch nicht gesetzt ist.

14. PLAT-Mittel nach Anspruch 12, in welchen ein globaler Speicherzugriff an alle M Partitionen des Caches ausgelöst wird, wenn eine bestimmte Partition für eine Speicherleseoperation nicht identifiziert werden kann.

15. PLAT-Mittel nach Anspruch 12, in welchen mehrere PLATs jeweils einem Speicherbenutzungselement zugeordnet sind, so daß jedes Speicherbenutzungselement Zugriffe an sein eigenes PLAT richten kann.

16. PLAT-Mittel nach Anspruch 12, die wenigstens zwei PLATs enthalten von denen das eine im Speicherlesemode und das andere im Speisherschreibmode arbeitet.

17. PLAT-Mittel nach Anspruch 12, die wenigstens zwei PLATs enthalten von denen das eine vom Befehlseingabebearbeitungstyp und das andere vom Datenbearbeitungstyp ist.

18. Cachespeicher nach einem der Ansprüche 1 bis 17, dadurch gekennzeichnet, daß mehrere ausgewählte Cacheoperationen in jedem Cachesyklus auftreten können wobei eine Operation an jeder Partition auftritt, die einem Anschluß für diesen Cachezyklus zugeordnet ist.

19. Cachespeicher nach einem der Ansprüche 1 bis 18, dadurch gekennzeichnet, daß jedes PLAT Eingaben zugeordnete Adressen mit Partitionsplatz-Kennzeichen enthält und in welchen jede Eingabe ferner ein Gültig-Bit (V) und ein Gültiger-Speicher-Bit (V/S) einschließt, wobei das Gültig-Bit anzeigt, ob eine Partitioneingabe für eine Adresse gültig ist oder ignoriert werden sollte und das Gültiger-Speicher-Bit anzeigt, daß eine Speicherabfrageoperation durchgeführt worden ist.

FIG.1

FIG.2

# FIG.3

FIG.4A

# FIG.4B

64

62

66

238

DIR.3

1 2 3

DIR.4

1 2 3

STK
3

STK
4

# FIG.4C

# FIG.4D

64

62

DIR.7

1 2 3

DIR.8

1 2 3

66

STK
7

STK
8

238

FIG. 5A

FIG. 5B

FIG.7

FIG.6

FIG.8

FIG.9   INSTRUCTION TYPE PLAT ENTRY

FIG.10   DATA TYPE PLAT ENTRY

# FIG.11A

## FIG.11B

EP 0 284 751 B1

FIG.12A

# EP 0 284 751 B1

## FIG.12B

FIG.12C

EP 0 284 751 B1

# FIG.13